# EUROPÄISCHE PATENTSCHRIFT

(11) **EP 3 705 266 B1**
(45) Veröffentlichungstag und Bekanntmachung des Hinweises auf die Patenterteilung: **17.08.2022**
(21) Anmeldenummer: 19161717.4
(22) Anmeldetag: 08.03.2019
(51) Int. Cl.: B29C 64/135, B29C 64/214, B33Y 10/00, B33Y 30/00

(54) **VERFAHREN ZUM ADDITIVEN AUFBAU EINES DREIDIMENSIONALEN PRODUKTS**
METHOD FOR ADDITIVE MANUFACTURE OF A THREE DIMENSIONAL PRODUCT
PROCÉDÉ DE FABRICATION ADDITIVE D'UN PRODUIT TRIDIMENSIONNEL

(43) Veröffentlichungstag der Anmeldung: 09.09.2020
(73) Patentinhaber: Ivoclar Vivadent AG, 9494 Schaan (LI)
(72) Erfinder: John, Hendrik, 9470 Buchs SG (CH)
(74) Vertreter: Uexküll & Stolberg

(56) Entgegenhaltungen:
- US-A- 5 447 822
- US-A1- 2006 022 379
- US-A1- 2018 071 989
- T. M Hafkamp ET AL: "A trade-off analysis of recoating methods for vat photopolymerization of ceramics", , 1. Januar 2017 (2017-01-01), XP055620080, Gefunden im Internet: URL:http://sffsymposium.engr.utexas.edu/si tes/default/files/2017/Manuscripts/ATradeO ffAnalysisofRecoatingMethodsforVat.pdf [gefunden am 2019-09-09]

## Beschreibung

Die vorliegende Erfindung betrifft ein Verfahren zum additiven Aufbau eines dreidimensionalen Produkts mit Top-Down-Stereolithographie, wobei fließfähiges, photopolymerisierbares Material in einer Wanne durch Belichtung von oben ortsselektiv ausgehärtet wird.

Die Erfindung betrifft allgemein den additiven Aufbau (additive manufacturing) von dreidimensionalen Produkten durch stereolithographisches Aushärten von fließfähigem, photopolymerisierbaren Material, das in aufeinanderfolgenden Schichten ortsselektiv ausgehärtet wird, wobei die schichtweise ortsselektiv vorgegebenen Belichtungsgebiete durch die Daten eines 3D-Modells des aufzubauenden Produkts festgelegt werden.

Die Erfindung zielt insbesondere auf die Fertigung von Dentalprodukten und orthodontischen Produkten ab, insbesondere auf die Fertigung von dentalen Totalprothesen und Teilprothesen, die sich aus einer die Gingiva simulierenden Basis und vorgefertigten Zähnen zusammensetzen, wobei Basis und Zähne aus unterschiedlichen Materialien bestehen, um die natürlichen Eigenschaften optimal simulieren zu können.

Bei einem derzeit verbreiteten Verfahren zur Herstellung von Totalprothesen und Teilprothesen werden Konfektionszähne in einer Schablone, die gleichzeitig die Pressform darstellt, in der richtigen Position gehalten und von einem Basismaterial, z.B. PMMA, umspritzt/umpresst.

Bei digitalen Prozessketten werden Kunstzähne und Basis getrennt voneinander, beispielsweise durch zerspanende oder additive Bauverfahren, hergestellt und nach ihrer separaten Fertigstellung in der Regel miteinander verklebt, um so die Kunstzähne in der Basis zu verankern. Dabei können vorgefertigte Konfektionszähne oder individuell hergestellte Kunstzähne verwendet werden.

Die Fertigung dentaler und orthodontischer Produkte, wie etwa verschiedener Arten von Teilprothesen und Zahnspangen, aus mehreren Komponenten ist immer noch mit viel Handarbeit verbunden. Modellguss, Biegeroboter für Drähte und Metallklammern, sowie additive Fertigungsschritte für weitere Teile des Produkts können den Fertigungsprozess dabei unterstützen, ein vollständig durchgängig digitaler Bauprozess ist allerdings heute noch nicht realisierbar. In diesem Zusammenhang ist insbesondere problematisch, dass Metallteile, wie Drähte und Klammerkomponenten, in weitere Komponenten, die z.B. aus Kunststoff hergestellt werden, eingebettet werden müssen. Das ist bisher möglich, indem die Metallkomponenten in eine Pressform eingebracht und mit Kunststoffmaterial umspritzt werden. Alternativ kann eine orthodontische Platte aus Kunststoff gefertigt werden, in der Ausnehmungen für die zu integrierenden Metallkomponenten vorgesehen sind. Nach Einlegen der Metallkomponenten in die Ausnehmungen können dann die Ausnehmungen manuell vergossen und die Oberflächen verschliffen und poliert werden. In jedem Fall sind hier viele Einzelschritte und manuelle Zwischenschritte notwendig, was einer weitgehend digitalisierten Prozesskette im Wege steht.

In WO 2016/083296 A1 ist ein Verfahren zur Herstellung einer Dentalprothese durch Aufdrucken der Prothesenbasis auf die Prothesenzähne beschrieben. Dabei werden die Prothesenzähne in einer Okklusionsplatte fixiert, so dass die basalen Enden der Prothesenzähne freiliegen. Die basalen Seiten sämtlicher Prothesenzähne werden durch Abschleifen derart gekürzt, dass alle Basalflächen in einer Ebene liegen. Anschließend wird die Okklusionsplatte mit den Prothesenzähnen in eine Halterung eines stereolithographischen 3D-Druckers eingesetzt. Dargestellt ist in diesem Zusammenhang ein Bottom-Up-Stereolithographieverfahren, bei dem die Okklusionsplatte an einer vertikal verfahrbaren Bauplattform so aufgehängt ist, dass die Prothesenzähne mit ihren basalen Enden nach unten weisend daran hängen. Die basalen Endbereiche der Prothesenzähne werden dann durch Absenken der Bauplattform in eine mit photopolymerisierbarer Flüssigkeit gefüllte Wanne getaucht, bis die Prothesenzähne mit ihren unten liegenden basalen Seiten an der Bodenplatte der Wanne anliegen. Die Bodenplatte ist im Baugebiet transparent, und unterhalb der Bodenplatte befindet sich die Belichtungseinheit zur ortsselektiven Belichtung. Auf diese Weise kann eine erste Schicht ausgehärtet werden, die die basalen Endbereiche der Prothesenzähne einfasst. Alle weiteren nachfolgend ausgehärteten Schichten werden durch sukzessives Anheben der Bauplattform und der Prothesenzähne mit der daran schon gebildeten Schicht nach oben und durch weiteres ortsselektives Aushärten von Schichten der Prothesenbasis angefertigt. Bei dieser Verfahrensweise können die basalen Endbereiche der Prothesenzähne maximal in einer Tiefe eingebettet sein, die der maximalen Durchhärtetiefe des Prothesenbasismaterials entspricht, welche typischer Weise im Millimeterbereich liegt. Ferner ist die Grenzlinie zwischen der angebauten Prothesenbasis und den Prothesenzähnen eine gerade Linie, nämlich die Linie des Flüssigkeitsspiegels des photopolymerisierbaren Materials, die sich nach dem Absenken der basalen Enden der Prothesenzähne in das photopolymerisierbare Material über der unteren Oberfläche der Bauplattform einstellt. Dies bedingt ein unnatürliches Aussehen der Totalprothese, da im menschlichen Gebiss die Grenzlinie zwischen Zahnfleisch und Zähnen keine gerade Linie ist. Insbesondere ist es mit dem hier beschriebenen Verfahren nicht möglich, den natürlichen Zahnfleischpapillen entsprechende erhöhte Bereiche im Grenzbereich zweier benachbarter Zähne zu generieren.

Neben dem ausdrücklich beschriebenen Verfahren, das gerade erläutert worden ist, ist auch angedeutet, dass die Prothesenzähne an der Bauplattform in photopolymerisierbares Material abgesenkt werden könnten, und das photopolymerisierbare Material von oben belichtet werden könnte. Diese nicht weiter beschriebene Variante entspricht dann einem Top-Down-Stereolithographieverfahren, bei dem die auszuhärtende Materialschicht durch eine Rakel, die über die Materialoberfläche streicht, eingeebnet wird.

Bei Bottom-Up-Stereolithographieverfahren ist die Schichtdicke der nächsten auszuhärtenden Schicht präzise definierbar, indem, bei der ersten auszuhärtenden Schicht, die Bauplattform soweit in das photopolymerisierbare Material abgesenkt wird, bis ihre Unterseite in dem der gewünschten Schichtdicke entsprechenden Abstand über dem Wannenboden liegt, d.h. durch Materialverdrängung wird die genau gewünschte Schichtdicke zwischen der Unterseite der Bauplattform und dem Wannenboden eingestellt. Bei den nachfolgend auszuhärtenden Schichten wird entsprechend der Abstand zwischen der Unterseite der zuletzt ausgehärteten Schicht und dem Wannenboden in der beschriebenen Weise eingestellt.

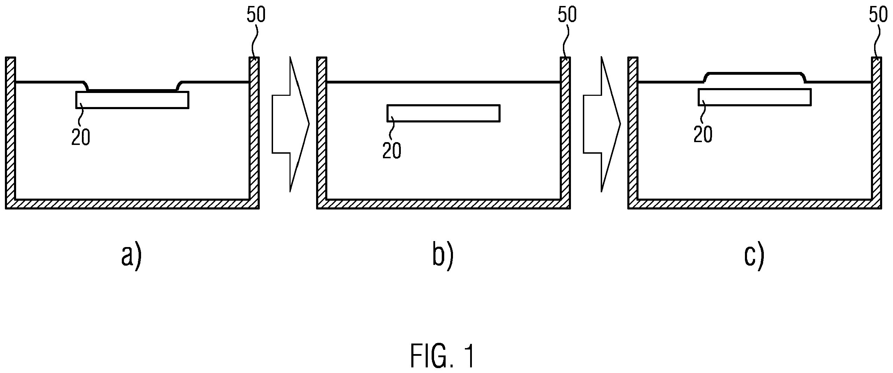

Bei Top-Down-Stereolithographieverfahren ist eine solche Schichtdefinition mit der gewünschten Dicke für die nächste auszuhärtende Schicht mittels einer Referenzebene (die gleichzeitig Bauebene ist) nicht möglich. Bei Top-Down-Stereolithographie muss eine Schicht photopolymerisierbaren Materials mit definierter Schichtdicke auf der Oberseite der Bauplattform (für die erste auszuhärtende Schicht) oder auf der Oberseite der zuletzt ausgehärteten Schicht definiert werden. Dazu wird die Bauplattform weiter als die gewünschte Schichtdicke der nächsten Schicht tiefer in die Wanne abgesenkt (auch bekannt als "deep dipping"), damit das photopolymerisierbare Material über die Bauplattform, respektive die zuletzt auspolymerisierte Schicht nachfließen kann. Danach wird die Bauplattform wieder auf das gewünschte Maß der Schichtdicke der nächsten Schicht angehoben, d.h. die Differenz der Strecken des Absenkens und der wieder Anhebens beträgt die gewünschte Schichtdicke. Allerdings bildet sich dabei in der Regel keine Schicht mit glatter Oberfläche und gleichmäßiger Dicke, sondern ein Meniskus über der Bauplattform bzw. der zuletzt ausgehärteten Schicht, wobei die Schichtdicke bzw. Höhe des Meniskus in der Regel größer, z.B. 0,5mm - 1,5mm, ist als die gewünschte, zu bauende Schichtdicke, typischer Weise 0,05mm - 0,15mm. Je höher die Viskosität und/oder die Oberflächenspannung des Materials ist, desto höher ist der sich aufbauende Meniskus. Durch den schichtweisen Aufbau käme es somit mangels präziser Definition der auszuhärtenden Schicht zu erheblichen Ungenauigkeiten des Bauteils. Die Entstehung eines solchen Meniskus ist anschaulich in Fig. 1 dargestellt, wobei in Fig. 1 a) eine Bauplattform 20 bereits ein Stück weit in photopolymerisierbares Material in einer Wanne 50 abgesenkt ist; dabei muss die Bauplattform 20 über die gewünschte Schichtdicke hinaus tiefer in die Wanne 50 abgesenkt werden, wie in Fig. 1 b) gezeigt, damit das photopolymerisierbare Material über die Oberfläche der Bauplattform 20 nachfließt. Anschließend wird die Bauplattform wieder soweit angehoben, wie in Fig. 1 c) gezeigt, bis sie gegenüber dem Flüssigkeitsspiegel in den die Bauplattform 20 seitlich umgebenden Bereichen der Wanne nur noch auf einer Tiefe der gewünschten Schichtdicke liegt; allerdings wird dabei auch Material oberhalb der Bauplattform 20 angehoben, so dass der erwähnte Meniskus oberhalb der Bauplattform 20 verbleibt. Solche Ungenauigkeiten, die ohne weiteres eine Abweichung von mehr als 1 mm in der Schichtdicke nach oben betragen können, sind nicht akzeptabel.

Herkömmlich werden zur Glättung der Oberfläche und Nivellierung der Schichtdicke des photopolymerisierbaren Materials massive Rakelvorrichtungen eingesetzt, die über die Oberfläche der zuletzt gebildeten Schicht verfahrbar sind. Eine Rakelvorrichtung umfasst eine horizontal verfahrbare aufgehängte Rakel, deren untere Kante auf eine definierte Höhe einstellbar ist. Die verfahrbare Rakel wird in einer solchen Höhe über das Baugebiet verfahren, dass photopolymerisierbares Material durch die sich bewegende Rakel verschoben wird und eine glattgestrichene Schicht von photopolymerisierbarem Material mit der gewünschten Schichtdicke zurückbleibt.

Es können sich aber Situationen und Konstellationen beim Bauvorgang von Produkten ergeben, bei denen eine über die Oberfläche des Baugebiets verfahrbare Rakel nicht ohne weiteres einsetzbar ist, wenn z.B. ein zuvor gefertigtes Bauteil mit einem anderen Material umbaut werden soll und dabei bei der ersten zu polymerisierbaren Schicht über die Oberfläche des anderen Materials hinausragt. In solchen Situationen sind Rakelvorrichtungen nicht einsetzbar, da eine über die Oberfläche fahrende Rakel mit herausragenden Teilen kollidieren würde.

Ähnliche Komplikationen ergeben sich, wenn ein Produkt in einer anderen Struktur aufgebaut werden soll, die seitlich des aufzubauenden Produkts höher aufragende Vorsprünge hat.

In solchen Konstellationen sind Bottom-Up-Stereolithographieverfahren per se nicht durchführbar und auch Top-Down-Stereolithographieverfahren mit massiver Rakel nicht anwendbar, deren Einsatzgebiet insofern beschränkt ist.

Aus "A trade-off analysis of recoating methods for vat polymerization of ceramics", T.M. Haferkamp et al., 1. Januar 2017, XP0556200800, sind neben Rakelverfahren weitere Verfahrensweisen zur Definition einer neu aufgetragenen Schicht bekannt, darunter auch die Verwendung einer Druckluftdüse, deren Druckluftstrahl auf die Oberfläche der neue aufgebrachten Schicht gerichtet und darüber verfahren wird, um diese zu glätten und ihre Dicke einzustellen. Auf diesem Stand der Technik beruht der Oberbegriff von Patentanspruch 1.

Es ist Aufgabe der vorliegenden Erfindung, ein verbessertes Top-Down-Stereolithographieverfahren anzugeben, das auch in Fallkonstellationen wie oben beschrieben anwendbar ist, wenn beim Aufbau eines mehrteiligen Produkts eine weitere Komponente an eine schon vorhandene Komponente angebaut werden soll.

Zur Lösung dieser Aufgabe dient das Verfahren zum additiven Aufbau eines dreidimensionalen Produkts mit den Merkmalen des Patentanspruchs 1. Vorteilhafte Ausführungsformen der Erfindung sind in den Unteransprüchen aufgeführt.

Bei einem Verfahren zum additiven Aufbau eines dreidimensionalen Produkts unter Anwendung von Top-Down- Stereolithographie, bei dem fließfähiges, photopolymerisierbares Material in einer Wanne durch Belichtung von oben ortsselektiv ausgehärtet wird, wird in folgender Weise vorgegangen, um die Oberfläche der als nächstes auszuhärtenden Materialschicht zu glätten und zu nivellieren. Soweit die vorhergehend ausgehärtete Schicht vor der Belichtung ebenso nivelliert worden ist, d.h. auf einheitliches Niveau mit dem Flüssigkeitsspiegel in der Wanne in der Umgebung der Bauplattform gebracht worden ist, wird so auch eine definierte und gleichmäßige Schichtdicke erzeugt. Es wird aus einer Druckgasdüse eines Gebläses, das im Abstand oberhalb eines Flüssigkeitsspiegels in der Wanne verfahrbar ist, ein quer zur Verfahrrichtung der Druckgasdüse ausgedehnter Druckgasstrahl auf die Oberfläche des photopolymerisierbaren Materials gerichtet, der durch Verfahren des Gebläses mit der Druckgasdüse über auszuhärtende Bereiche der Oberfläche auf diese eingewirkt, um die Oberfläche zu glätten. Durch die Einwirkung des quer zur Fahrrichtung ausgedehnten Druckgasstrahls wird photopolymerisierbares Material aus Bereichen mit erhöhter Oberfläche verdrängt, und dadurch die Oberfläche auf ein einheitliches Niveau mit dem, die Bauplattform seitlich umgebenden, Flüssigkeitsspiegel in der Wanne nivelliert. Soweit auf einen Abstand der Druckgasdüse zur Materialoberfläche Bezug genommen wird, ist dieser Abstand als der senkrechte Abstand zum die Bauplattform umgebenden Flüssigkeitsspiegel des fließfähigen Materials in der Wanne definiert. Von diesem Abstand kann, vor der Glättung und Nivellierung durch den darüber verfahrenen Druckgasstrom, der senkrechte Abstand zur Materialoberfläche im Bereich oberhalb der Bauplattform abweichen, da dort die Materialoberfläche durch einen etwa gebildeten Meniskus verändert sein kann.

Bei einem Top-Down- Stereolithographieverfahren wird also durch eine Druckgasdüse ein quer zur Verfahrrichtung der Düse ausgedehnter Gasstrom auf die Oberfläche des photopolymerisierbaren Materials gerichtet und darüber verfahren, um die Oberfläche zu nivellieren. Die Druckgasdüse wirkt hier mit ihrem quer zur Fahrrichtung ausgedehnten Druckgasstrahl wie eine (im Fall von Druckluft als Druckgas) Luftrakel, wobei die Luftrakel (Düse) anders als herkömmliche mechanische Rakel sich auf Abstand oberhalb der Oberfläche des photopolymerisierbaren Materials befindet, aber durch den Druckluftstrom dennoch direkt auf die Materialoberfläche einwirkt.

Als Gebläse wird hier allgemein eine Druckgasquelle mit einer Druckgasdüse angesehen, die den Druckgaszustrom aus der Druckgasquelle als geformten Druckgasstrahl und gerichteten Volumenstrom abgibt. Als Druckgasquelle kann eine maschinelle Pumpe (Ventilator) oder ein Druckgastank dienen. Die Druckgasquelle kann direkt mit der Druckgasdüse verbunden sein und damit eine einheitliche Baugruppe bilden. In vielen Fällen wird als Druckgas Druckluft eingesetzt, so dass das Gebläse eine Druckluftquelle und eine damit verbundene Druckluftdüse aufweist, die einen Druckluftstrahl abgibt. Alternativ zu Druckluft kann ein anderes Gas unter Druck zugeführt werden, etwa ein Schutzgas wie z.B. Stickstoff, um Inhibierung an der Materialoberfläche zu reduzieren bzw. zu unterbinden.

Das erfindungsgemäße Verfahren ist ein Verfahren zum Aufbau eines mehrkomponentigen Produkts, bei dem an eine schon vorhandene Komponente des aufzubauenden Produkts durch ein additives Bauverfahren unter Anwendung von Top-Down-Stereolithographie eine weitere Komponente des aufzubauenden Produkts angebaut wird. Dazu wird die vorhandene Komponente, die von einer sich unterhalb dieser vorhandenen Komponente befindlichen Bauplattform getragen wird, durch Absenken der Bauplattform in die Wanne mit dem fließfähigem, photopolymerisierbaren Material abgesenkt und dann um eine geringere Strecke wieder angehoben, wobei die Differenz aus Absenkungsstrecke und Anhebungsstrecke gleich der gewünschten Schichtdicke ist, um so die nächste zu belichtenden Schicht zu bilden. Dabei kann fließfähiges, photopolymerisierbares Material auch über Bereiche der vorhandenen Komponente nachfließen, falls diese durch die Absenkung unter den Spiegel des photopolymerisierbaren Materials in der Wanne gelangen. Die Druckgasdüse ist in einer solchen Höhe horizontal verfahrbar aufgehängt, dass sie nach dem erstmaligen Absenken und Anheben zur Bildung einer neuen Schicht aus photopolymerisierbaren Material höher als der höchste Punkt der vorhandenen Komponente liegt. Dazu kann die Druckgasdüse bezüglich der Höhe, in der sie über die Wanne verfahrbar ist, einstellbar sein, damit sie an die Höhe der schon vorhandenen Komponente angepasst werden kann. Auf diese Weise wird erreicht, dass die Druckluftdüse über das Baugebiet verfahren werden kann, um auszuhärtende Bereiche des photopolymerisierbaren Materials mittels des Stroms des Druckgases zu glätten und zu nivellieren, ohne dabei mit eventuell herausragenden Teilen der vorhandenen Komponente zu kollidieren. Nach der Glättung der Oberfläche wird das photopolymerisierbare Material ortsselektiv für die aktuell auszuhärtende Schicht belichtet, um die Schicht in der gewünschten Form auszuhärten. Die Schritte des Absenkens und Anhebens zur Bildung einer neuen Schicht aus photopolymerisierbarem Material, des Verfahrens der Druckgasdüse mit ihrem Druckgasstrahl über die Oberfläche der nächsten auszuhärtenden Schicht zu deren Glättung und der anschließenden ortsselektiven Belichtung zur Aushärtung werden so oft wiederholt, bis die weitere Komponente des auszubauenden Produkts an die schon vorhandene Komponente angebaut ist.

Grundsätzlich ist mit dieser Verfahrensweise jedwede Form von Anbau von weiteren Bereichen an eine bereits vorhandene Komponente in laterale und vertikale Richtungen möglich.

So können zum Beispiel auch verschiedene Zonen eines Prothesenzahns mit verschiedenen Materialien sukzessive angebaut werden.

In einer bevorzugten Ausführungsform wird mit einem fest mit der Druckgasdüse verbundenen Abstandssensor der Abstand zur Oberfläche des photopolymerisierbaren Materials gemessen. Damit kann ortsabhängig der Abstand zur Oberfläche des photopolymerisierbaren Materials erfasst und dadurch Erhöhungen wie im Fall von Menisken sowie, nach Einwirken des Luftstrahls die Beseitigung von Erhöhungen durch Verdrängung von Material erfasst werden. In diesem Fall ist es insbesondere bevorzugt, dass der von dem Abstandssensor gemessene Abstand zur Oberfläche des photopolymerisierbaren Materials dazu verwendet wird, um Betriebsparameter des über die Oberfläche des photopolymerisierbaren Materials fahrenden Gebläses zu regeln. Dadurch wird der Gasstrom so eingestellt, dass er das photopolymerisierbare Material im Bereich eines Meniskus oder einer anderweitig erhöhten Stelle so verdrängt bzw. glättet, dass nach Einsatz der Druckgasdüse (z.B. Luftrakel) eine insgesamt (d.h. mit dem die Bauplattform umgebenden Flüssigkeitsspiegel) nivellierte Oberfläche und eine definierte Schichtdicke des photopolymerisierbaren Materials zur selektiven Aushärtung ausgebildet ist, d.h. es ist ein einheitlicher Flüssigkeitsspiegel gebildet. Die Intensität des Gasstroms kann durch verschiedene Regelgrößen wie dem Abstand zur Oberfläche des photopolymerisierbaren Materials, dem Volumenstrom, der Strömungsgeschwindigkeit, der seitlichen Ausdehnung des Gasstroms gesteuert werden, während die Düse über das Baugebiet verfahren wird, so dass ein gleichmäßiger Abstand zur Oberfläche über das Baugebiet und somit eine einheitliches Flüssigkeitsniveau realisiert wird, was bedeutet, dass die Oberfläche des photopolymerisierbaren Materials kontrolliert geglättet und nivelliert ist und somit Menisken eliminiert sind.

In einer bevorzugten Ausführungsform wird zur Regelung von Betriebsparametern des Gebläses zur Glättung und Nivellierung der Oberfläche des photopolymerisierbaren Materials der Druck des Gases, die Strahlbreite, der Volumenstrom, die Verfahrgeschwindigkeit der Druckgasdüse über die Oberfläche und/oder die Neigung des von der Druckgasdüse abgegebenen Druckgasstrahls zur Orthogonalen auf der Oberfläche des photopolymerisierbaren Materials geregelt, um den gleichmäßigen Abstand zur Oberfläche über das auszuhärtende Gebiet zu realisieren und somit einen einheitlichen Flüssigkeitsspiegel zu erhalten.

Eine solche Regelung ist aber nicht unbedingt erforderlich, denn es können vorab für jeweilige Materialeigenschaften von photopolymerisierbaren Materialien geeignete Betriebsparameter für die Druckgasdüse ermittelt und dann für einen konkreten Bauvorgang mit einem bestimmten photopolymerisierbaren Material die entsprechenden Betriebsparameter ausgewählt werden, die zum Verdrängen und Nivellieren dieses photopolymerisierbaren Materials geeignet sind.

In einer bevorzugten Ausführungsform ist die Druckgasdüse mit einem länglichen Düsenspalt, der quer zur Verfahrrichtung der Düse ausgedehnt ist, als eine Luftrakel (Air Blade) ausgebildet, wobei der Neigungswinkel des abgegebenen Druckluftstroms im Bereich von +-45° zur Orthogonalen auf der Oberfläche des photopolymerisierbaren Materials einstellbar ist, vorzugsweise orthogonal zur Oberfläche ausgerichtet ist, über die zur Aushärtung vorgesehenen Bereiche der Oberfläche des photopolymerisierbaren Materials verfahren wird.

In einer bevorzugten Ausführungsform wird die vorhandene Komponente wenigstens teilweise mit ausgehärtetem Photopolymer als weitere Komponente umbaut, so dass sie in dem umbauten Bereich von dem ausgehärteten Photopolymer eingefasst ist.

In einer bevorzugten Ausführungsform ist die schon vorhandene Komponente ein Prothesen- oder Kunstzahnbogen oder ein Teil davon. Der Kunstzahnbogen oder der Teil davon wird von der Bauplattform mit der basalen Seite nach oben weisend getragen. Als weitere Komponente wird eine Prothesenbasis oder ein Teil davon um die basalen Bereiche des Kunstzahnbogens oder des Teils davon herum angebaut, wodurch der Kunstzahnbogen oder der Teil davon mit den basalen Bereichen formschlüssig in die angebaute Prothesenbasis eingebettet wird.

Vorzugsweise werden in mehreren Schritten zum Anbau von mehreren weiteren Komponenten verschiedene photopolymerisierbare Materialien nacheinander zum Aufbau des Produkts verbaut. Dadurch können gewünschte Materialzonen, Materialschichtungen und Verläufe in dem Produkt erzeugt werden.

In einer bevorzugten Ausführungsform ist die vorhandene Komponente, an die mit den oben beschriebenen Verfahrensweisen eine weitere Komponente angebaut wird, selbst eine Komponente die mit dem erfindungsgemäßen Verfahren aufgebaut worden ist.

In einer bevorzugten Ausführungsform wird zunächst ein erster Teilbereich des Produktes mit einer Aussparung zum Einlegen einer vorhandenen Komponente mit einem Verfahren der oben beschriebenen Art aufgebaut. Dann wird die vorhandene Komponente in die mindestens eine Aussparung eingelegt und anschließend darüber ein weiterer Teilbereich des Produktes mit den oben beschriebenen Verfahrensweisen aufgebaut, so dass die eingelegte vorhandene Komponente von den beiden aufgebauten Teilbereichen wenigstens teilweise eingefasst und umbaut ist. Diese bevorzugte Verfahrensweise eignet sich beispielsweise zum Aufbau von orthodontischen Produkten, wie etwa Zahnspangen, die eine orthodontische Platte mit darin teilweise integrierten Metallteilen (Drähte, Klammerelemente) aufweisen. In diesem Fall kann ein erster Bauabschnitt der orthodontischen Platte durch Polymerisieren schichtweise ausgehärtet werden, wobei dieser erste Bauabschnitt Aussparungen für die Einlegeteile enthält. Nach Fertigstellung des ersten Bauabschnitts verbleibt dieser zum Einlegen der Bauteile auf der Bauplattform, wird aber zur besseren Handhabung aus dem Material in der Wanne nach oben herausgefahren und gegebenenfalls zur Reinigung mit der Druckgasdüse abgeblasen, um die Aussparungen für den Einlegeprozess besser zugänglich zu machen. In diese Aussparungen werden dann in einer Bauprozessunterbrechung nach dem vorgesehenen Design Einlegeteile (beispielsweise Drähte oder Klammerelemente) eingelegt, woraufhin der Aufbau des zweiten Bauabschnitts der orthodontischen Platte erfolgt, wodurch die Aussparungen gefüllt und somit die Einlegeteile umbaut werden und letztere in die orthodontische Platte wenigstens teilweise integriert werden.

In einer bevorzugten Ausführungsform dieser Verfahrensweise ist die eingelegte vorhandene Komponente ein Metallteil, ein Kunststoffteil, ein Kompositteil oder ein Keramikteil, das auf diese Weise wenigstens teilweise in das dentale oder orthodontische Produkt integriert wird.

Mit einem derartigen erfindungsgemäßen Verfahren ist es auch möglich, eine dentale Teilprothese anzufertigen, bei der die Zähne und der Gingiva-Anteil nach dem erfindungsgemäßen Verfahren additiv gefertigt und Halteelemente aus Metallguss als Einlegeteile durch den Gingiva-Anteil (Prothesenbasis) umbaut werden und am Ende formschlüssig eingebettet sind.

In einer bevorzugten Ausführungsform wird nach einem Belichtungsschritt die Bauplattform über den Flüssigkeitsspiegel angehoben wird und werden die schon aufgebauten Teile zur Reinigung mit einem Druckgasstrahl aus dem Gebläse abgeblasen, um den Überschuss von anhaftendem unpolymerisierten Material zu entfernen, und wird optional anschließend die Bauplattform in ein Bad mit Reinigungsflüssigkeit eingetaucht, wieder daraus angehoben und werden die schon aufgebauten Teile mit einem Druckgasstrahl aus dem Gebläse zum Trocknen abgeblasen.

Die Erfindung wird im Folgenden anhand von Ausführungsbeispielen im Zusammenhang mit den Zeichnungen beschrieben, in denen:
Figuren 1 a) bis c) aufeinanderfolgende Schritte beim Absenken einer Bauplattform in eine Wanne mit photopolymerisierbaren Material zeigen,
Figuren 2 a) bis c) weitere aufeinanderfolgende Schritte zur Nivellierung der Oberfläche des photopolymerisierbaren Materials wie in einem erfindungsgemäßen Verfahren zeigen,
Figuren 3 a) und b) zwei Draufsichten aus unterschiedlichen Richtungen auf eine Druckgasdüse zeigen, die in einem erfindungsgemäßen Verfahren zum Aufbau eines Produkts einsetzbar ist,
Figuren 4 a) bis c) schematische perspektivische Ansichten von verschiedenen Ausführungsformen Gebläsen mit Druckgasdüsen zeigen, mit denen aus unter Druck stehenden zugeführten Gas ausgedehnte Gasströme zur Einwirkung auf photopolymerisierbares Material in einem erfindungsgemäßen Verfahren erzeugt werden können,
Figuren 5 a) bis f) aufeinanderfolgende Schritte in einem erfindungsgemäßen Bauverfahren zeigt, bei dem eine Prothesenbasis an die basalen Seiten der Prothesenzähne angebaut und um die basalen Enden der Prothesenzähne herum gebaut wird,
Figuren 6 a) bis f) aufeinanderfolgende Schritte eines erfindungsgemäßen Bauverfahrens zeigen, bei dem ein Kunstzahn aus verschiedenen Materialien aufgebaut wird,

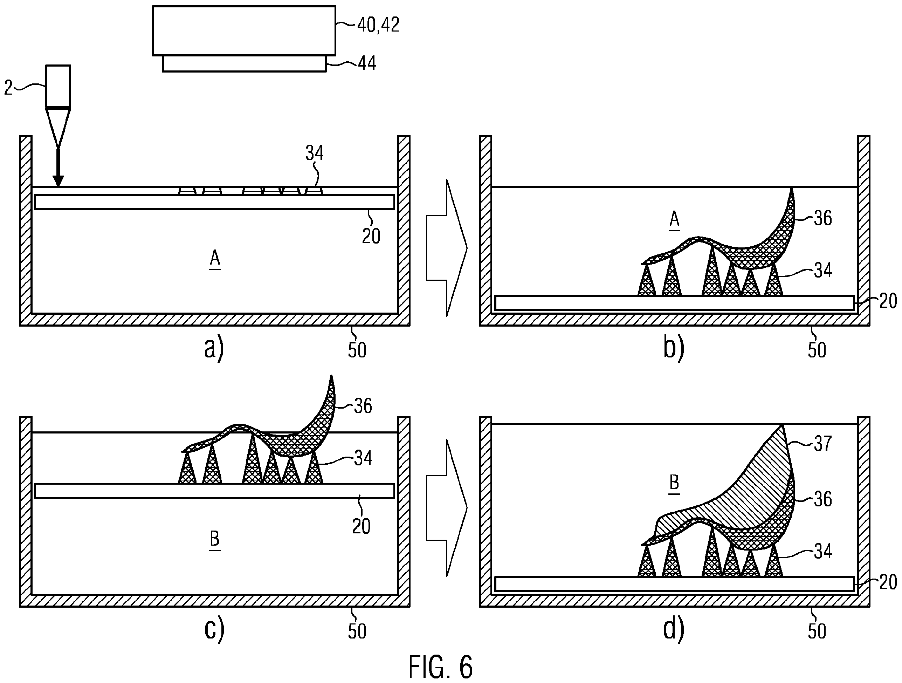

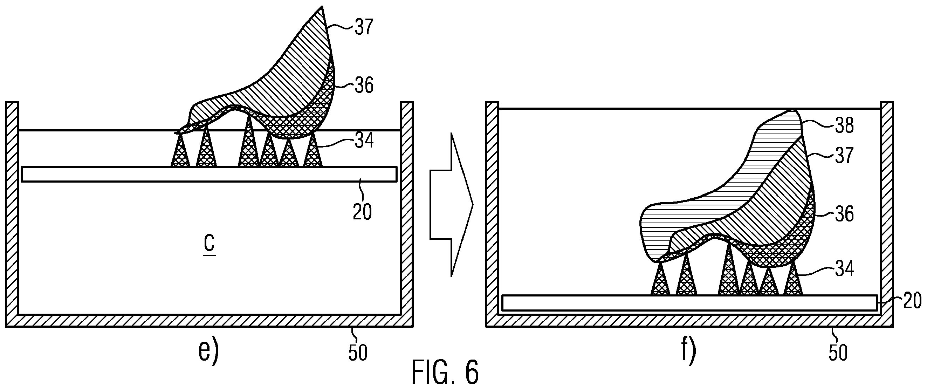

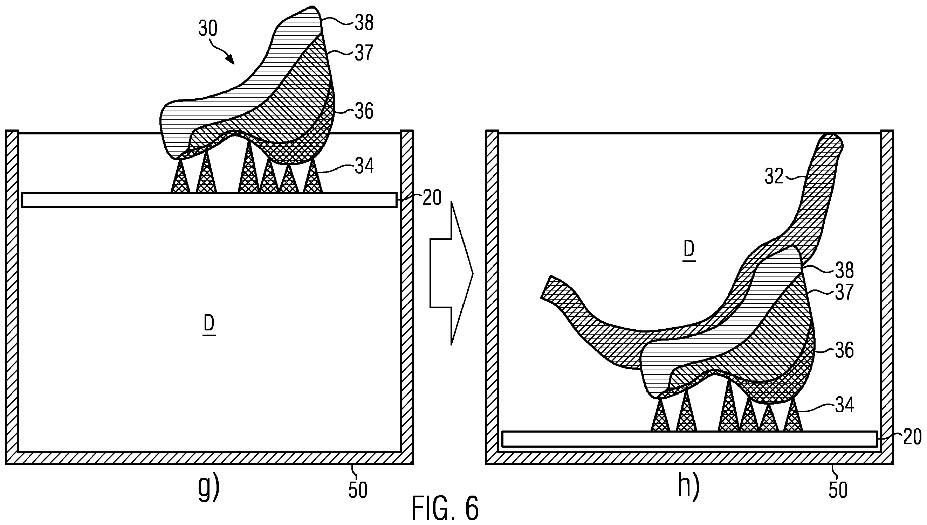

Figuren 6 g) bis h) aufeinanderfolgende Schritte eines erfindungsgemäßen Bauverfahrens zeigen, bei dem ein Kunstzahn mit Prothesenbasismaterial umbaut wird,

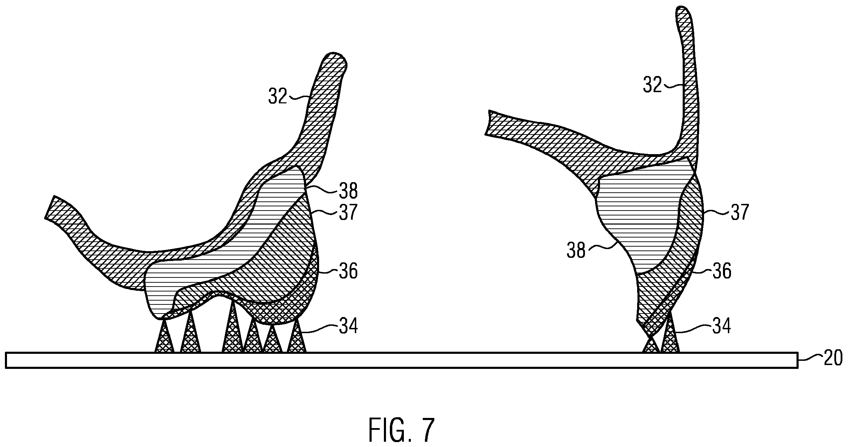

Figur 7 mit einem Verfahren nach den Figuren 6 aufgebaute Kunstzähne mit einer angebauten, die basalen Seiten der Kunstzähne einfassenden Prothesenbasis im Querschnitt zeigt,

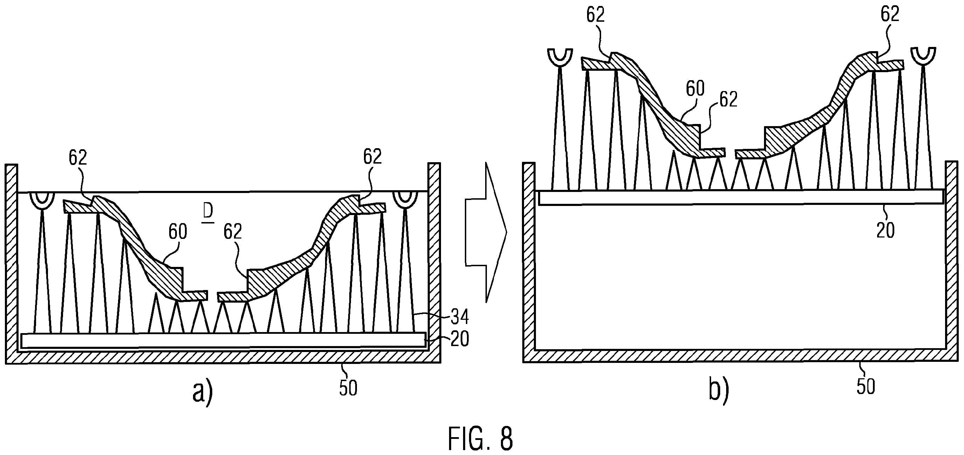

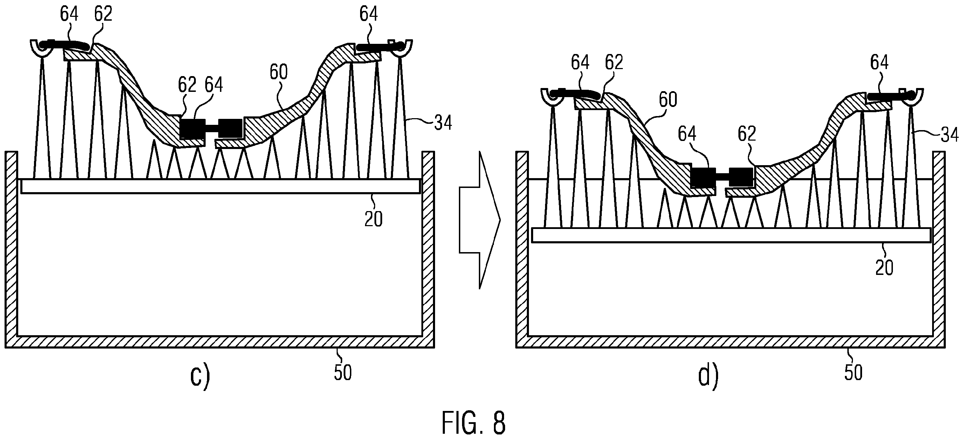

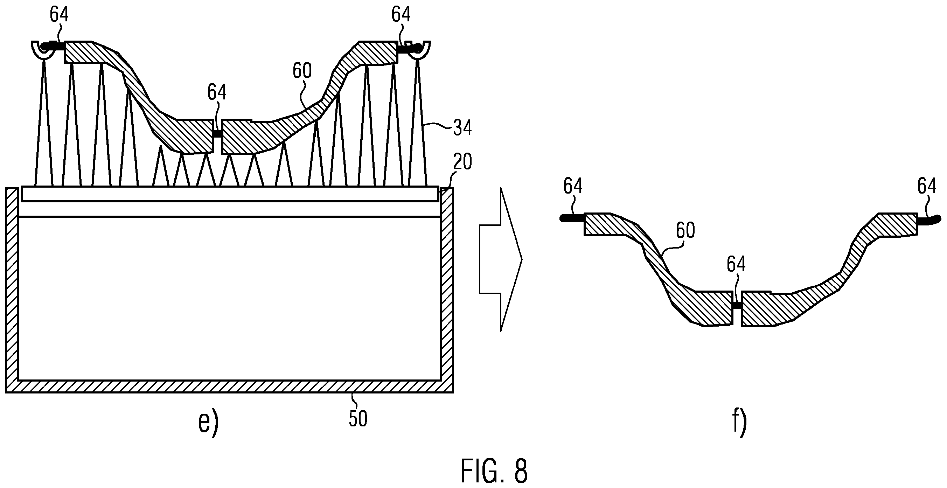

Figuren 8 a) bis f) aufeinanderfolgende Schritte eines erfindungsgemäßen Verfahrens zeigt, bei dem eine orthodontische Platte mit integrierten Metallteilen aufgebaut wird, und

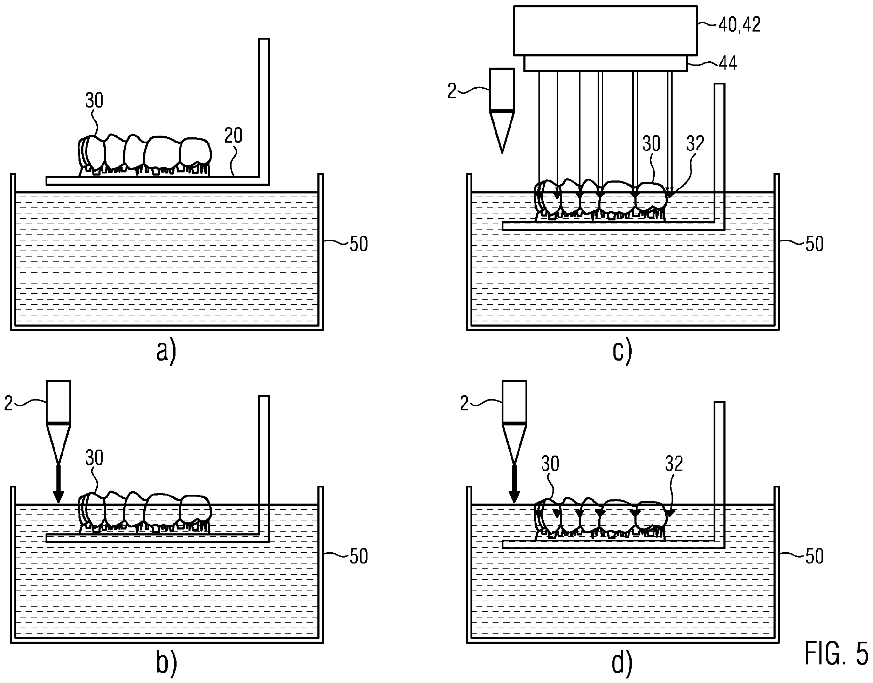

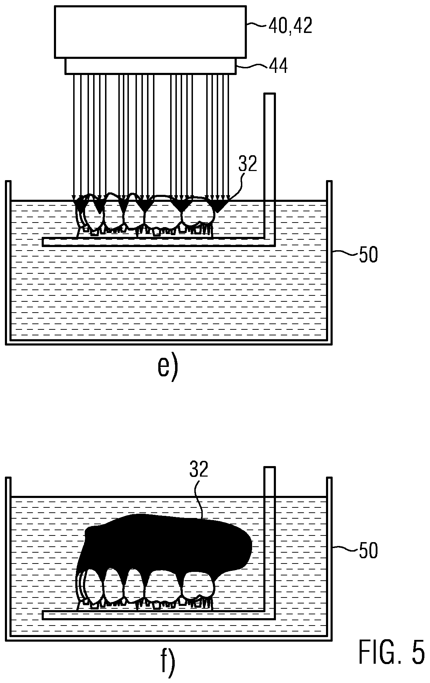

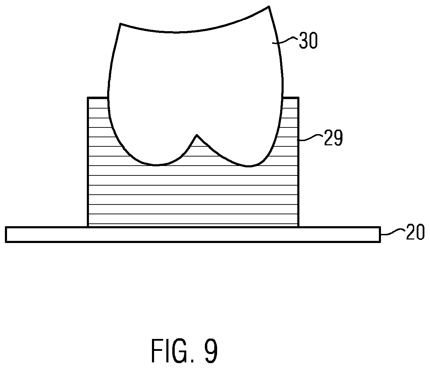

Fig. 9 einen schematischen Querschnitt einer Bauplattform mit einer darauf aufgebrachten Aufnahme zur Halterung eines anderweitig vorgefertigten Kunstzahns zeigt, der mit einem Verfahren wie in den Fig. 5 a) bis f) an seiner oben freiliegenden, basalen Seite mit einem erfindungsgemäßen Verfahren mit einer Prothesenbasis umbaut werden soll,

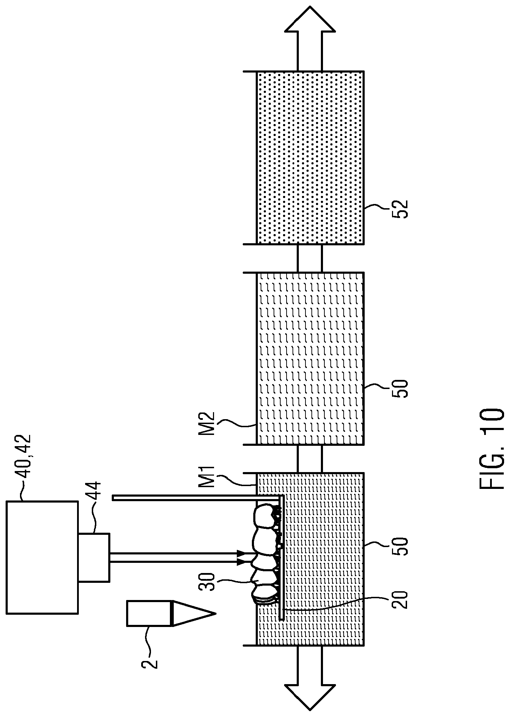

Figuren 10 bis 12 aufeinanderfolgende Schritte in einem erfindungsgemäßen Verfahren zum Aufbau von Kunstzähnen und zum anschließenden Anbau einer Prothesenbasis zeigen.

Bei den im Folgenden im Zusammenhang mit den Figuren beschriebenen Ausführungsbeispielen wird davon ausgegangen, dass als unter Druck stehendes Gas Druckluft verwendet wird, mit der dann durch eine Druckluftdüse ein ausgedehnter Druckluftstrom erzeugt wird, um auf die Oberfläche von photopolymerisierbaren Material einzuwirken, d.h. es werden durchgängig die Begriffe Druckluft statt allgemein Druckgas und Druckluftdüse statt allgemein Druckgasdüse verwendet. Die Druckluft kann durch einen Ventilator oder durch einen Druckluftspeicher bereitgestellt und einer Druckluftdüse zugeführt werden, wobei der Ventilator oder der Druckluftspeicher mit der Druckluftdüse eine einheitliche Baugruppe bilden können.

Mit Bezug auf die Fig. 1 a) bis c) wird nun zunächst erläutert, wie es bei einem Top-Down-Stereolithographieverfahren zur Bildung eines erhöhten Oberflächenbereichs (Meniskus) im Bereich oberhalb der Bauplattform kommen kann. In den Fig. 1a) bis c) ist die Bauplattform 20 nur schematisch und vereinfacht, ohne den sie tragenden Hubmechanismus gezeigt. Zur Bildung einer ersten Schicht von photopolymerisierbarem Material, das auf der Bauplattform ausgehärtet werden soll, wird folgendermaßen vorgegangen. Fig. 1 a) zeigt die Bauplattform 20 beim Absenken in das photopolymerisierbare Material in einer Wanne 50, wobei in dem Stadium von Fig. 1 a) die Absenktiefe noch so gering ist, dass das fließfähige, aber eine gewisse Viskosität aufweisende photopolymerisierbare Material noch nicht über die Oberfläche der Bauplattform 20 nachgeflossen ist. Aus diesem Grund wird die Bauplattform 20 in eine größere Tiefe als für die gewünschte Schichtdicke eigentlich erforderlich ist, abgesenkt, in der das photopolymerisierbare Material über die Bauplattform nachfließen kann. Dies ist in Fig. 1 b) gezeigt, in der das photopolymerisierbare Material bereits über die Oberfläche der Bauplattform 20 geflossen ist.

Um nun eine Schicht von photopolymerisierbaren Material auf der Bauplattform 20 mit der gewünschten geringeren Schichtdicke zu bilden, wird die Bauplattform 20 wieder angehoben bis sie in einer Tiefe entsprechend einer gewünschten Schichtdicke unterhalb des Flüssigkeitsspiegels des photopolymerisierbaren Materials in der Wanne 50 in der Umgebung der Bauplattform 20 liegt, d.h. unter dem Flüssigkeitsspiegel seitlich von der Bauplattform 20. Beim Anheben der Bauplattform auf diese Tiefe der Schichtdicke unter den Flüssigkeitsspiegel fließt nicht das gesamte überschüssige photopolymerisierbare Material aus dem Bereich oberhalb der Bauplattform 20 ab, sondern es hält sich darüber ein erhöhter Bereich als Meniskus, wie in Fig. 1c) dargestellt. Ein solcher Meniskus kann eine erhebliche Höhe von mehr als einem Millimeter haben und insofern eine präzise Definition einer Schicht aus photopolymerisierbaren Material mit einer genau definierten Schichtdicke erheblich stören. In in diesem Zusammenhang könnte eine Rakel verwendet werden, die mit einer unteren Kante parallel über den Flüssigkeitsspiegel verfahren wird, um das photopolymerisierbaren Material aus dem Bereich des Meniskus zu verschieben und dadurch eine glatte Oberfläche herzustellen und eine Schicht mit definierter Schichtdicke auf der Bauplattform zu definieren.

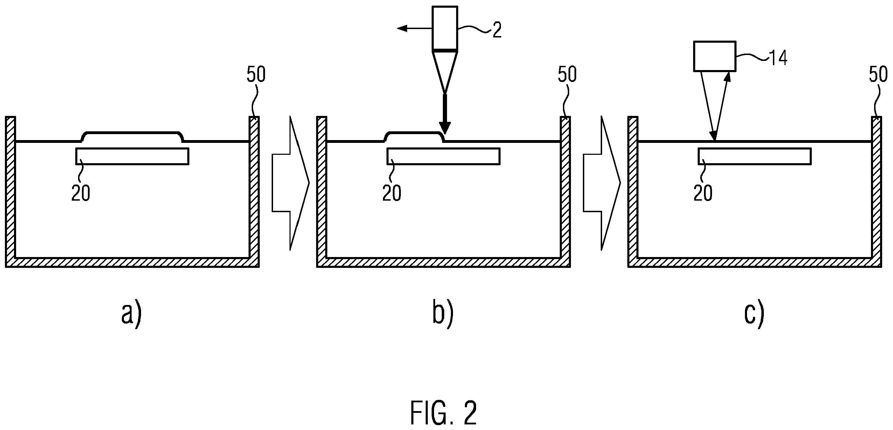

Wie einleitend erläutert soll im Zusammenhang mit der Erfindung beim Anbau einer weiteren Komponente an eine schon vorhandene Komponente des Produkts auf eine physische Rakel verzichtet werden, damit auch Bausituationen handhabbar sind, in denen Komponenten über den Flüssigkeitsspiegel in der Wanne hinausstehen, was den Einsatz einer physischen Rakel unmöglich macht, da sie mit einer solchen Komponente kollidieren würde. Zur Glättung und Nivellierung der Oberfläche des photopolymerisierbaren Materials wird hier ein auf Abstand oberhalb der Oberfläche verfahrbares Gebläse 2 mit einer Druckluftdüse eingesetzt, die einen ausgedehnten Druckluftstrahl auf die Oberfläche richtet, um diese zu glätten und nivellieren. Insbesondere wird dabei photopolymerisierbares Material aus dem Bereich des Meniskus verdrängt, wie in Fig. 2 b) illustriert ist. Die Verdrängung von photopolymerisierbaren Material aus dem Meniskus führt zu einer minimalen Erhöhung des Flüssigkeitsspiegels neben der Bauplattform und damit auch über der Bauplattform, wenn der Flüssigkeitsspiegel insgesamt nivelliert ist. Dieser Vorgang kann bei der Definition der Schichtdicke vorab berücksichtigt werden, indem die Bauplattform 20 auf eine Höhe unterhalb des Flüssigkeitsspiegels in Fig. 2 a) angehoben wird, so dass nach Verdrängung des photopolymerisierbaren Materials aus dem Meniskus die gewünschte Schichtdicke über der Bauplattform verbleibt.

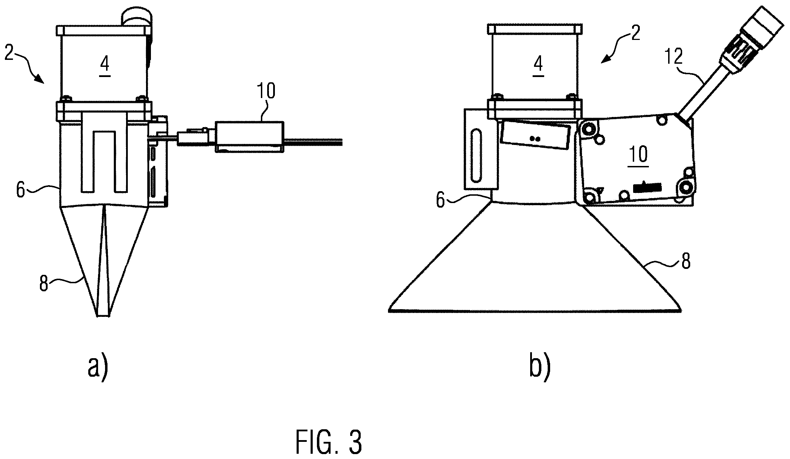

Figuren 3 a) und b) zeigen zwei Draufsichten auf ein Gebläse 2. Das Gebläse 2 setzt sich aus einem Ventilator in dem Ventilatorgehäuse 4, dem Gehäuseteil 6 zur Weiterleitung der Druckluft aus dem Ventilator und der Druckluftdüse 8 zusammen, die an ihrem unteren Ende einen länglich ausgedehnten Düsenspalt hat, die einen länglich ausgedehnten Druckluftstrahl abgeben kann. Figur 3 a) ist eine seitliche Draufsicht, in der die Längsrichtung des Düsenspaltes senkrecht zur Figurenebene steht, und Figur 3 b) ist eine Draufsicht aus einer um 90° gedrehten Richtung, in der die Längsrichtung des Düsenspaltes in der Zeichenebene liegt. Die Druckluftdüse 8 ist mit ihrem oberen Ende direkt an das mittlere Gehäuse- oder Leitungsteil 6 angeschlossen. Die Druckluftdüse 8 ist in den beiden Ansichten von Figur 1a) und b) im entgegengesetzten Sinne kegelstumpfförmig, so dass es sich in der Ansicht von Figur 1 a) konisch zu einem schmalen Düsenspalt an seinem unteren Ende verjüngt, während es sich in der um 90° gedrehten Ansicht von Figur 1 b) kegelstumpfförmig zu einem in Längsrichtung ausgedehnten Düsenspalt aufweitet. Die Längsausdehnung des Düsenspaltes überspannt typischerweise die Ausdehnung des Baufeldes in X- oder Y-Richtung. Die Breite des Düsenspaltes quer zu seiner Längsausdehnung kann z.B. im Bereich von 0,1 bis 10 mm liegen und vorzugsweise von 0,5 bis 2 mm.

Es sei hier aber angemerkt, dass die Druckluftdüse im Sinne der vorliegenden Erfindung nicht auf Druckluftdüsen mit einem länglich ausgedehnten Düsenspalt beschränkt ist. Es sind auch Düsenöffnungsprofile möglich, bei denen Längs- und Querausdehnung der Düsenöffnung gleiche oder ähnliche Größe haben, so dass ein großflächiger Düsenstrahl erzeugt wird. Es können auch mehrere separate Düsenöffnungen, die als Matrix zueinander angeordnet sind, zusammenwirkend einen flächig ausgedehnten Druckluftstrahl erzeugen.

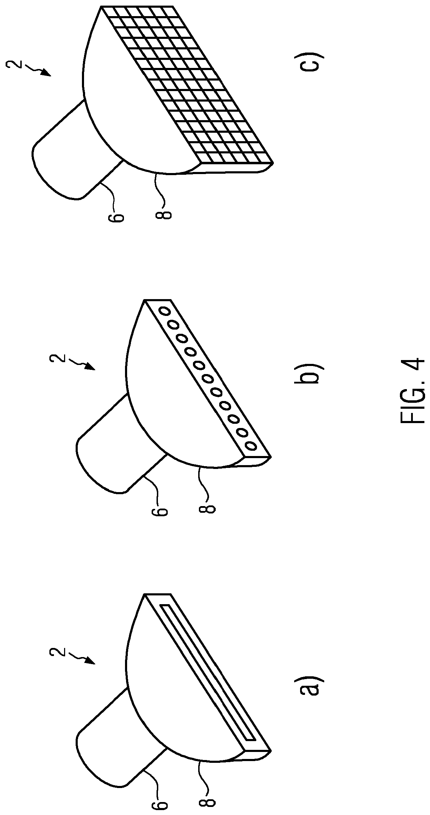

Alternative Ausführungsformen für Gebläse 2 mit Druckluftdüsen sind in den Fig. 4 a) bis c) als schematische perspektivische Ansichten gezeigt. In diesen Ansichten sind nur das Gehäuse- oder Leitungsteil 6 mit der angeschlossenen Druckluftdüse 8 dargestellt, während das damit verbundene Ventilatorgehäuse 4 zur Vereinfachung der Darstellung fortgelassen ist. In Fig. 4a) ist die Druckluftdüse 8 als längliche Schlitzdüse ausgebildet, die einen länglichen Düsenschlitz als einzige Düsenöffnung aufweist. In Fig. 4 b) ist eine Mehrzahl von Düsenöffnungen in einer länglichen linearen Anordnung von Düsenöffnungen an der Druckluftdüse 8 gebildet, wobei die längliche ausgedehnte Reihe von Düsenöffnungen effektiv wieder einen in Längsrichtung der Anordnung der Düsenöffnungen ausgedehnten Luftstrom erzeugen. In Fig. 4 c) ist eine Druckluftdüse 8 mit einer matrixförmigen Anordnung von eng benachbarten Düsenöffnungen gezeigt; diese Druckluftdüse 8 mit matrixförmiger, flächiger Anordnung von Düsenöffnungen erzeugt einen flächig ausgedehnten Druckluftstrom, der großflächig auf eine Oberfläche einwirken kann.

An dem Gebläse 2 ist in der Ausführungsform nach Figur 3 a) und b) seitlich ein weiteres Gehäuse 10 angebracht, in dem Treiber-Elektronik für den Betrieb des Gebläses in dem Gehäuseteil 4 untergebracht ist. An das Gehäuse 10 ist ein Kabel 12 angeschlossen, das Leitungen zur elektrischen Versorgung des Gebläses und Leitungen zum Übertragen von Steuersignalen zu der Treiber-Elektronik enthält. Ferner können in dem Kabel 12 auch Leitungen zum Ableiten von Sensorsignalen geführt sein. In vorteilhaften Ausführungsformen kann nämlich ein Abstandsensor vorhanden sein, der fest mit der Druckluftdüse verbunden ist und den Abstand zur Oberfläche von photopolymerisierbarem Material, das sich unter der Druckluftdüse befindet, messen kann. Mit dem Abstandssensor kann zum einen der Füllstand des Materials (Flüssigkeitsspiegel) in der Wanne gemessen werden, und zum anderen können Erhöhungen oder Vertiefungen der Oberfläche des photopolymerisierbaren Materials erfasst werden, wenn die Druckluftdüse zusammen mit dem Abstandssensor über die Oberfläche verfahren wird. Ein solcher Sensor 14 ist schematisch in Fig. 2 c) angedeutet. Eine Steuereinheit kann dazu eingerichtet sein, bei Feststellung einer Erhöhung der Oberfläche im Vergleich zum Flüssigkeitsspiegel den Betrieb des Gebläses in diesem Bereich bezüglich der Leistung zu intensivieren, bis die Erhöhung der Oberfläche durch Verdrängung von photopolymerisierbaren Material beseitigt ist und die Oberfläche vollständig nivelliert ist. Eine solche Regelung der eingestellten Leistung des Gebläses ist aber nicht unbedingt erforderlich. Es kann vorab für ein photopolymerisierbares Material in Abhängigkeit von dessen Viskosität festgestellt werden, bei welcher Leistung des Gebläses der Druckluftstrahl in ausreichender Weise auf das photopolymerisierbare Material einwirkt, um es verdrängen zu können.

Wie in Figur 5 b) und d) schematisch illustriert, ist das Gebläse 2 oberhalb einer Wanne 50 einer Top-Down-Stereolithographievorrichtung aufgehängt, so dass das Gebläse 2 den Druckluftstrahl auf die Oberfläche des in der Wanne 50 der Vorrichtung befindlichen photopolymerisierbaren Materials richten kann. Die Druckluftdüse 2 ist in einer vertikalen Höhe über der Wanne 50 in horizontaler Richtung über der Wanne verfahrbar, um im Baugebiet auf Oberflächenbereiche von photopolymerisierbarem Material in der Wanne einwirken zu können. Zur Definition der Richtungen vertikal und horizontal sei bemerkt, dass "vertikal" die Richtung einer Orthogonalen auf der Oberflächenspiegel einer Flüssigkeit ist (also "im Lot") und "horizontal" (also "in Waage") eine Richtung einer Geraden in einer zum Oberflächenspiegel parallelen Ebene ist. Dabei kann auch vorgesehen sein, dass die Höhe der Druckluftdüse über der Wanne einstellbar ist, so dass sie vor der Ausführung eines erfindungsgemäßen Verfahrens an die Eigenschaften des aufzubauenden Produktes angepasst werden kann. Das bedeutet, dass die die Druckluftdüse in einer Höhe oberhalb des höchsten Punktes einer schon vorhandenen Komponente liegen soll, an die weitere Komponenten des Produktes mit einem erfindungsgemäßen Verfahren angebaut werden sollen, wie weiter unten erläutert wird. Damit ist sichergestellt, dass die Druckluftdüse nicht mit der schon vorhandenen Komponente kollidieren kann.

Das Gebläse 2 kann geradlinig in einer horizontalen Richtung verfahrbar sein, wobei im dargestellten Ausführungsbeispiel der Düsenspalt mit seiner Längsausdehnung dann unter einem Winkel zur Verfahrrichtung verläuft, so dass der Düsenstrahl quer zur Verfahrrichtung ausgedehnt ist. Der Winkel der Längsrichtung des Düsenspaltes zur Verfahrrichtung kann insbesondere 90° betragen, was die maximale Ausdehnung des Druckluftstrahls quer zur Verfahrrichtung ergibt. Daneben sind auch andere Bewegungsweisen zum Verfahren der Druckluftdüse über die Oberfläche des photopolymerisierbaren Materials möglich. So kann das Gebläse auch um eine vertikale Achse drehbar aufgehängt sein, so dass der Druckluftstrahl durch Drehung des Gebläses 2 drehend über die Materialoberfläche bewegt wird. Die Drehachse kann auch gegenüber der vertikalen Längsachse der zylindrischen Gehäuseteile 4 und 6 des Gebläses versetzt sein, so dass das Gebläse eine schwenkende Bewegung über die Materialoberfläche ausführt. Eine solche schwenkende Bewegung des Gebläses lässt dann den Luftstrom die Oberfläche ähnlich wie ein Scheibenwischer überstreichen.

Mit Bezug auf die Figuren 5 a) bis f) wird nun ein erfindungsgemäßes Top-Down-Stereolithographieverfahren beschrieben, bei dem eine Druckluftdüse zum Glätten der Oberfläche von photopolymerisierbaren Material eingesetzt wird. Die Stereolithographievorrichtung ist nur sehr schematisch dargestellt, wobei das Gebläse 2 mit der Druckluftdüse nur in den Figuren 5 b) - d) schematisch angedeutet ist. Die Stereolithographievorrichtung umfasst eine Wanne 50, die mit fließfähigem photopolymerisierbaren Material gefüllt ist. Eine in vertikaler Richtung verfahrbare Bauplattform 20 kann in die Wanne 50 eintauchen. Zur Vereinfachung der Darstellung ist nur in Figur 5 c) eine oberhalb der Wanne 50 befindliche Belichtungseinheit gezeigt, die schematisch Lichtquelle 40 und einen räumlichen Intensitätsmodulator 42 in einer Einheit integriert zeigt, deren Ausgabe durch eine Projektionsoptik 44 in die Bildebene abgebildet wird. Der räumliche Intensitätsmodulator (Spatial Light Modulator - SLM) umfasst eine Matrix von Belichtungselementen, z.B. einen Mikrospiegel-Array, die Licht von der Lichtquelle über eine Projektionsoptik 44 selektiv auf jeweils zugeordnete Bildelemente in einer Bildebene an der Oberfläche des photopolymerisierbaren Materials projizieren. Die Projektionsoptik 44 kann zu Durchführung einer klassischen Projektion ausgestaltet sein. Zur Verbesserung des Bauergebnisses ist die Projektionsoptik 44 jedoch vorzugsweise als objektseitig telezentrische Optik ausgebildet, um einen möglichst orthogonalen Eintrittswinkel der selektiven Strahlung auf die Materialoberfläche im gesamten Baufeldbereich zu gewährleisten.

Der Vollständigkeit halber sei erwähnt, dass zur Realisierung einer ortsselektiven Belichtung auch eine Laserquelle mit einem Umlenkspiegel/Gyroscope verwendbar ist, der die Bildebene sukzessiv Bildelement für Bildelement abtastet.

In dem vorliegenden Ausführungsbeispiel in Figuren 5 a) bis f) wird das Verfahren in erfindungsgemäßer Weise dazu angewendet, um an eine schon vorhandene Komponente eines Produktes eine weitere Komponente des Produktes schichtweise anzubauen, bzw. die vorhandene Komponente zu umbauen. Im vorliegenden Beispiel ist das aufzubauende Produkt eine dentale Totalprothese bestehend aus einer Prothesenbasis und Prothesenzähnen. Dabei werden die Prothesenzähne, die als Zahnbogen angeordnet sind, in diesem Fall als schon vorhandene Komponente angesehen. Die Prothesenzähne 30 sind in Figur 5 a) als Zahnbogen dargestellt, der von der Bauplattform 20 getragen wird, wobei die Prothesenzähne 30 von stiftartigen Verbindungen, sogenannten Stützstrukturen, getragen werden, die einerseits mit okklusalen bzw. inzisalen Bereichen der Prothesenzähne 30 und andererseits mit der Bauplattform 20 verbunden sind, so dass die Prothesenzähne 30 mit ihrer basalen Seite nach oben ausgerichtet sind.

Zunächst wird die Bauplattform 20, gesteuert durch eine Steuereinheit, in das photopolymerisierbare Material in der Wanne 50 auf eine vorbestimmte Tiefe abgesenkt, wie in Figur 5 b) dargestellt. Es wird im Folgenden zur Vereinfachung der Beschreibung und der Formulierungen gelegentlich nur von einem Absenkvorgang um eine bestimmte Tiefe (Schichtdicke) Bezug genommen, wobei dies so zu verstehen ist, dass dies das Ergebnis eines Absenkens um eine größere Absenkstrecke und ein anschließendes Wiederanheben um eine niedrigere Strecke handelt, wobei die Differenz aus Absenkstrecke und Anhebestrecke der Schichtdicke entspricht. Durch die Absenkung auf die vorbestimmte Tiefe wird festgelegt, wo an die schon vorhandene Komponente (Prothesenzähne 30) die in Richtung basal nach okklusal/inzisal höchsten (am weitesten in Richtung okklusal/inzisal reichenden) Bereiche der weiteren Komponente (Prothesenbasis) angebaut werden sollen. Diese vorbestimmte Tiefe entnimmt die Steuereinheit aus den beiden zueinander im selben Koordinatensystem angeordneten 3D-Datensätzen der Prothesenzähne 30 und der Prothesenbasis.

Nach dem Absenken der Bauplattform 20 auf die vorbestimmte Tiefe, wie in Figur 5 b) gezeigt, wird der Druckluftstrahl der Druckluftdüse des Gebläses 2 über die Oberfläche des photopolymerisierbaren Materials verfahren, um dieses zu glätten. Wie aus Figur 5 b) ersichtlich, kann die Druckluftdüse dabei auch über Bereiche verfahren werden, in denen die basalen Enden der Prothesenzähne 30 über die Oberfläche des photopolymerisierbaren Materials hinausragen, was den Einsatz einer herkömmlichen Rakel verbietet, da eine solche mit den hinausragenden basalen Enden der Prothesenzähne 30 kollidieren würde. Durch Verfahren eines quer zur Verfahrrichtung ausgedehnten Druckluftstrahls aus der Druckluftdüse des Gebläses 2 wird photopolymerisierbares Material aus erhöhten Bereichen (Menisken), die gegenüber dem restlichen Oberflächenspiegel des photopolymerisierbaren Materials in der Wanne erhöht sind, verdrängt, um so die Oberfläche insgesamt zu nivellieren und einem allgemeinen Flüssigkeitsspiegel anzupassen.

Anschließend erfolgt die in Figur 5 c) schematisch dargestellte ortsselektive Belichtung, die von einer Steuereinheit nach Maßgabe eines digitalen 3D-Modells der anzubauenden Prothesenbasis durch Ansteuerung des Intensitätsmodulators 42 kontrolliert wird. Im vorliegenden Fall werden erste Bereiche 32 der anzubauenden Prothesenbasis durch Aushärten des photopolymerisierbaren Materials an die Prothesenzähne angebaut; im vorliegend dargestellten Fall sind dies Bereiche der Prothesenbasis, die im realen Zahnfleisch den Papillen im Übergangsbereich benachbarter Zähne entsprechen.

Anschließend wird die Bauplattform um eine Schichtdicke weiter nach unten in das photopolymerisierbare Material in der Wanne 50 abgesenkt; dieser Zustand ist in Fig. 5 d) gezeigt. Daraufhin wird wieder das Gebläse 2 mit seinem quer ausgedehnten Druckluftstrahl über die Oberfläche des photopolymerisierbaren Materials und die darüber hervorragenden basalen Endbereiche der Prothesenzähne 30 verfahren, um die Oberfläche des photopolymerisierbaren Materials zu glätten und zu nivellieren.

Daran schließt sich der nächste Belichtungsschritt an, der schematisch in Fig. 5 e) dargestellt ist. Dadurch wird eine weitere Schicht an die schon ausgehärteten Bereiche und an Bereiche der Prothesenzähne angebaut. Entsprechend vergrößert sich der durch Aushärten angebaute Bereich 32 der Prothesenbasis.

Diese Schritte von schrittweisem Absenken (Fig. 5 d)) und anschließendem Belichten einer weiteren Schicht (Fig. 5 e)) werden so oft wiederholt, bis die Prothesenbasis 32 vollständig aufgebaut ist, wie in Fig. 5 f) dargestellt.

Das Umbauen der basalen Endbereiche der Prothesenzähne durch Anbau der Prothesenbasis führt zu einem festen Verbund von Prothesenzähnen und Prothesenbasis ohne weitere Fügevorgänge oder die Verwendung von Klebstoff. Die basalen Endbereiche der Prothesenzähne sind von dem Material der Prothesenbasis umbaut und darin eingebettet, so dass die basalen Endbereiche der Prothesenzähne 30 formschlüssig mit der angebauten Prothesenbasis 32 eingreifen.

In dem oben beschriebenen Ausführungsbeispiel im Zusammenhang mit den Fig. 5 a) bis f) wurde davon ausgegangen, dass die Prothesenzähne 30 als schon vorhandene Komponente zu Beginn des Bauvorgangs auf der Bauplattform positioniert sind. Grundsätzlich ist es aber auch möglich, dass auch die Prothesenzähne 30 mit einem erfindungsgemäßen Top-Down-Stereolithographieverfahren auf der Bauplattform aufgebaut werden. Ein solches Ausführungsbeispiel für einen Bauvorgang für Prothesenzähne ist in den Fig. 6 a) bis f) illustriert. Zur Vereinfachung der Darstellung wird dabei der Aufbau eines einzelnen Prothesenzahns gezeigt, es lassen sich mit einem solchen Verfahren jedoch auch mehrere Prothesenzähne parallel nebeneinander oder ganze Zahnbögen aufbauen.

In Fig. 6 a) ist zunächst gezeigt, wie die Bauplattform 20 abgesenkt ist und eine erste Schicht für Stützstrukturen 34 in Form von kegelförmigen Haltestiften an die Bauplattform 20 durch Belichten und Aushärten an der Bauplattform angebaut ist, wobei nach jedem Belichtungsschritt die Bauplattform 20 wie oben erläutert durch Absenken und anschließendes Wiederanheben um eine geringere Strecke im Ergebnis effektiv um eine Schichtdicke abgesenkt und danach die Oberfläche des photopolymerisierbaren Materials A durch den ausgedehnten Druckluftstrahl aus der Druckluftdüse des Gebläses 2 geglättet und nivelliert wird. Die Stützstrukturen 34 werden in der Regel aus dem gleichen ersten Material A aufgebaut, wie es auch für den ersten Bauabschnitt 36 des Bauteils, in diesem Fall des okklusalen oder inzisalen Teils der aufzubauenden Prothesenzähne, eingesetzt wird. (die aufgebauten Stützstrukturen 34 sind schematisch in Fig. 6 b) gezeigt).

Nach Abschluss des ersten Bauabschnitts 36 (okklusale Schichformation des Prothesenzahns) auf den Stützstrukturen 34 wird die Bauplattform aus dem Material A nach oben gefahren, mittels Gebläse 2 abgeblasen und von überschüssigem Material A befreit, optional in einer weiteren Wanne 52 (siehe Fig. 7) mit Reinigungsflüssigkeit gereinigt und anschließend mittels des Gebläses 2 zum Trocknen erneut abgeblasen.

Für den folgenden Bauabschnitt 37 mit einem zweiten photopolymerisierbaren Material B wird die Bauplattform samt erstem Bauabschnitt 36 und Stützstrukturen 34 in einer weiteren Wanne 50 mit einem zweiten photopolymerisierbaren Material B abgesenkt, was in Fig. 6 c) dargestellt ist. An Fig. 6 c) ist zu erkennen, dass zu Beginn des Aufbaus des zweiten Bauabschnitts 37 der erste Bauabaschnitt 36 über die Oberfläche des photopolymerisierbaren Materials B herausgeragt. Aus diesem Grund muss der Abstand des Gebläses 2 zum Materialspiegel mindestens so groß sein, dass beim Überfahren des Materialspiegels die Druckluftdüse nicht mit Teilen des ersten Bauabschnitts 36 kollidiert. Mit der vorliegenden Verfahrensweise wird die Glättung und Nivellierung der Oberfläche des zu photopolymerisierendem Materials durch laterales Verfahren des Gebläses 2 auf Abstand zur Oberfläche des photopolymerisierbaren Materials realisiert.

Sukzessive werden Schichten des zweiten Baumaterials B durch Belichten ausgehärtet und an den okklusalen Teil 36 des Prothesenzahns angebaut, bis schließlich ein weiterer Teil 37 des Prothesenzahns an den vorhergehenden Teil 36 angebaut ist, was in Fig. 6 d) dargestellt ist.

Der gleiche Ablauf, wie in Fig. 6 b) bis d) dargestellt, wiederholt sich in Fig. 6 e) bis f) für ein drittes Material C, um einen basalen Teil 38 anzubauen. Auch hier ragt der zuvor schichtweise generierte Bauabschnitt 37 anfangs über die Überfläche des photopolymerisierbaren Materials C heraus und erfordert den Einsatz der erhöht über dem Materialspiegel aufgehängten Gebläses 2 mit der Druckluftdüse zur Glättung und Nivellierung der Oberfläche des photopolymerisierbaren Materials C mittels Druckluftstrom.

Daraufhin kann, ähnlich wie in dem im Zusammenhang mit den Fig. 5 a) bis f) beschriebenen Bauvorgang zum Anbau einer Prothesenbasis, an die aufgebauten Teile 36, 37, 38 des Prothesenzahns durch sukzessives Aushärten von Schichten eines vierten photopolymerisierbaren Materials D schichtweise eine Prothesenbasis 32 angebaut werden. Dieser Bauvorgang ist schematisch durch den Übergang vom Zustand in Fig. 6 g) zum Zustand in Fig. 6 h) zusammenfassend illustriert.

Zum Abschluss des letzten Bauabschnitts kann die Bauplattform 20 mit dem vollständig additiv aus verschiedenen Materialien generierten Bauteil durch das Gebläse 2 abgeblasen, in einem Reinigungsbad gereinigt und anschließend durch das Gebläse 2 trockengeblasen werden.

Fig. 7 zeigt im Querschnitt links einen Aufbau im Backenzahn- und rechts im Frontzahn-Bereich mit okklusalem/inzisalem Teil 36 (Schneide), weiterem Teil 37 (Dentin) und basalem Teil 38 (Wurzel) und angebauter Prothesenbasis 32, die mit einem wie oben im Zusammenhang mit den Fig. 3a) bis h) beschriebenen Verfahren aufgebaut werden können. Dabei können die Prothesenzähne natürlich auch aus weniger oder mehr als drei Teilen 36, 37, 38 aufgebaut werden.

In Fig. 8a) bis f) ist schematisch ein Bauvorgang für eine orthodontische Platte mit metallischen Einlegeteilen gezeigt, das mit einem erfindungsgemäßen Verfahren aufgebaut werden kann, wobei die in das Polymer eingebetteten, metallischen Komponenten, wie Drähte und Klammerelemente, teilweise aus der Polymerplatte herausragen.

Dabei werden mit einem erfindungsgemäßen Top-Down-Stereolithographieverfahren in einem ersten Bauabschnitt Stützstrukturen 34, die hier schematisch kegelförmig dargestellt sind, und ein unterer Teil der orthodontische Platte 60 mit Aussparungen 62 auf der Bauplattform 20 aus demselben Material D durch schichtweisen Materialauftrag und ortsselektives Belichten aufgebaut, was in Fig. 8 a) dargestellt ist.

Dieser zuerst aufgebaute untere Teil der orthodontischen Platte 60 mit den Aussparungen 62 wird dann durch Anheben der Bauplattform 20 aus der Wanne 50 und dem photopolymerisierbaren Material D gefahren, so dass der untere Teil der orthodontischen Platte mit Ihren Aussparungen 62 frei zugänglich ist, wie in Fig. 8 b) dargestellt.

Daraufhin werden vorgefertigte Metallelemente 64, wie speziell gebogene Drähte und Klammerelemente, in die dafür vorgesehenen Aussparungen 62 eingelegt. In diesem Fall kann der untere Teil der orthodontischen Platte 60 mit ihren Aussparungen und den darin eingelegten Metallelementen 64, wie in Fig. 8 c) dargestellt, auch als schon vorhandene Komponente des herzustellenden Dentalprodukts (vollständige orthodontische Platte) angesehen werden, an die nun mit einem bevorzugten erfindungsgemäßen Verfahren weitere Komponenten des vollständigen Produkts angebaut werden.

Durch einen nun folgenden zweiten Bauabschnitt werden die Aussparungen 62 mit den darin positionierten Einlegeteilen 64 durch schichtweises Absenken, Glätten mittels Luftrakel (Gebläse 2) und ortsselektives Belichten sukzessive zugebaut, wie in Fig. 8d) dargestellt. So werden die Einlegeteile 64 formschlüssig in die orthodontische Platte eingebettet, wie in Fig. 8e) dargestellt. Dabei existieren für die Stützstrukturen, die orthodontische Platte 60 mit den Aussparungen 62 und den Aussparungen 62 selbst jeweils ein 3D-Datensatz im selben Koordinatensystem.

Um an der Position der tiefsten Aussparung (mittig) mit dem schichtweisen Verschließen zu beginnen, wird der untere Teil der orthodontischen Platte 60 mit den positionierten Einlegeteilen 64 nur soweit in die Materialwanne abgesenkt, dass auch hier ein Teil des Bauteils rechts und links über die Oberfläche des photopolymerisierbaren Materials hinausragt, siehe Fig. 5d). Bei den schichtweisen Aufbauschritten zur Füllung der Aussparungen 62 muss jeweils nach Absenken der Bauplattform um eine Schichtdicke die Oberfläche des photopolymerisierbaren Materials durch Verfahren des Gebläses 2 mit dem auf die Oberfläche der nun auszuhärtenden Schicht gerichteten Druckluftstrom berührungslos geglättet werden. Eine herkömmliche Rakel würde auch hier mit den über die Oberfläche hinausragenden Teilen der schon gebauten Komponenten kollidieren.

Nach Abschluss des zweiten Bauabschnitts, dem Verschliessen der Aussparungen 62, und nach der erforderlichen Nachbearbeitung (Reinigung, Nachvergütung, Entfernung der Stützstrukturen und Polieren) erhält man so die komplettierte orthodontische Platte 60 samt eingebetteter Einlegeteile 64, wie in Fig. 8 f) gezeigt.

In Fig. 9 ist schematisch eine Ausgangssituation gezeigt, in der vorkonfektionierte Kunstzähne oder ein vorkonfektionierter Kunstzahnbogen die schon vorhandene Komponente darstellt, wobei der Kunstzahn 30 an der basalen Seite mit einer Prothesenbasis umbaut werden soll, wie dies im Zusammenhang mit den Fig. 5 a) bis f) beschrieben worden ist. Im Unterschied zu dem in den Fig. 6 a) bis h) beschriebenen Verfahren, bei dem auch die Kunstzähne 30 mit einem erfindungsgemäßen Verfahren aufgebaut worden sind, wird im Beispiel von Fig. 9 ein durch ein anderes Verfahren vorkonfektionierter Kunstzahn 30 verwendet. In diesem Fall wurde zunächst mittels des Top-Down-Stereolithographieverfahrens eine Aufnahme 29 auf die Bauplattform 20 gedruckt, die mit zu den okklusalen/inzisalen Bereichen der Kunstzähne komplementären Ausnehmungen versehen ist, so dass die Kunstzähne 30 passgenau darin eingesetzt und so positioniert gehalten werden können. Anschließend können die basalen Seiten der Kunstzähne 30 durch ein erfindungsgemäßes Top-Down-Stereolithographieverfahren mit einer Prothesenbasis umbaut werden, so dass die Kunstzähne 30 schließlich formschlüssig in der aufgebauten Prothesenbasis (nicht gezeigt) eingebettet sind.

In den Fig. 10 bis 12 ist noch einmal ein erfindungsgemäßer Bauprozess zusammengefasst, bei dem zunächst Prothesenzähne 30 auf einer Bauplattform durch ein erfindungsgemäßes Top-Down-Stereolithographieverfahren aufgebaut worden sind, wobei mehrere verschieden Baumaterialien Verwendung finden können, wie z.B. im Zusammenhang mit den Fig. 6 a) bis h) erläutert worden ist, wobei nach jedem Materialwechsel zum Aufbau eines weiteren Teils der Prothesenzähne ein Reinigungsvorgang durchgeführt wird.

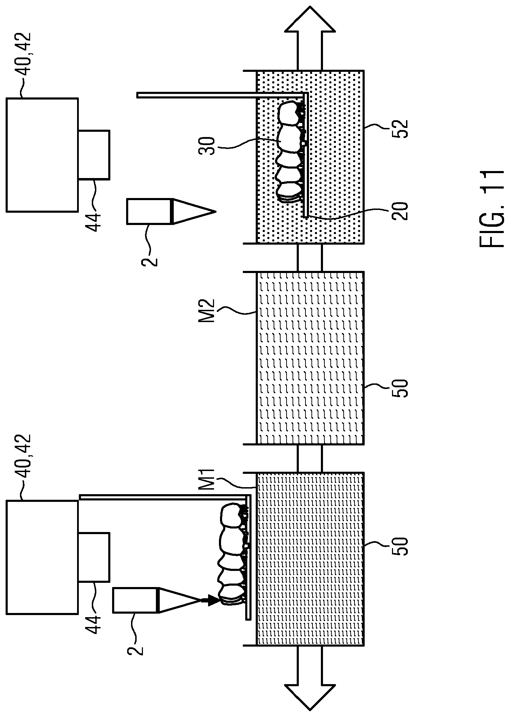

Ein möglicher Reinigungsvorgang zwischen jedem Materialwechsel soll hier noch einmal im Detail beschrieben werden: Nach Abschluss einer Bauphase wird die Bauplattform 20 aus der Wanne angehoben und die aufgebauten Teile mittels Gebläse 2 abgeblasen, um noch anhaftendes, überschüssiges, nicht polymerisiertes Material zu entfernen; das erfolgt über derselben Wanne wie beim vorhergehenden Bauvorgang (siehe Fig. 11 links), damit das abgeblasene Material wieder in die richtige Wanne gelangt. Gegebenenfalls kann der Reinigungsvorgang durch Reinigung in einer Reinigungsflüssigkeit in einer Reinigungswanne 52 fortgesetzt werden, wozu die Bauplattform 20 in eine Wanne mit Reinigungsflüssigkeit abgesenkt werden kann, wie in Fig. 11 rechts dargestellt ist. Anschließend kann die Bauplattform mit den darauf aufgebauten Teilen wieder aus der Reinigungsflüssigkeit angehoben werden und über der Reinigungswanne durch das Gebläse 2 zur Trocknung abgeblasen werden. Daraufhin kann eine weitere Bauphase mit einem weiteren Baumaterial erfolgen.

In Fig. 10 ist der letzte Schritt des Aufbaus Prothesenzähne 30 dargestellt, wobei in diesem Schritt eine Schicht aus photopolymerisierbaren Material M1 als letztes Stück eines Prothesenzahns ausgehärtet wird.

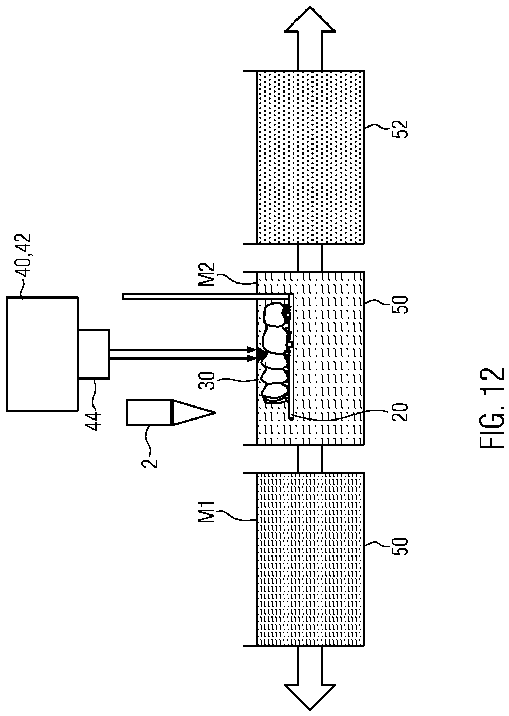

Daraufhin erfolgt noch einmal eine Reinigung der Prothesenzähne 30 wie oben beschrieben. Anschließend können die Wannen 50 so verfahren werden, dass die Wanne 50 mit dem Material M2 im Bereich der Bauplattform 20 liegt, so dass diese in die Wanne 50 mit dem photopolymerisierbaren Material M2 abgesenkt werden kann, um an die Prothesenzähne 30 als nun schon vorhandene Komponente der Totalprothese eine Prothesenbasis mit dem erfindungsgemäßen Verfahren anzubauen, wobei der Beginn dieser Bauphase in Fig. 12 gezeigt ist. Nach jedem Schritt des Anbaus einer Schicht der Prothesenbasis an die basalen Bereiche der Prothesenzähne und darauf folgender Absenkung der Bauplattform und Wiederanheben bis auf eine Schichtdicken zur Bildung einer neuen Schicht photopolymerisierbaren Materials wird dessen Oberfläche durch Verfahren des Gebläses 2 mit seinem Druckluftstrom darüber geglättet und nivelliert.

## Patentansprüche

1. Verfahren zum additiven Aufbau eines dreidimensionalen Produkts mit Top-Down-Stereolithographie, bei dem fließfähiges, photopolymerisierbares Material in einer Wanne (50) durch Belichtung von oben ortsselektiv ausgehärtet wird, wobei aus einer Druckgasdüse eines Gebläses (2), das oberhalb des Flüssigkeitsspiegels in der Wanne verfahrbar ist, ein quer zur Verfahrrichtung der Gebläses (2) ausgedehnter Druckgasstrahl auf die Oberfläche des photopolymerisierbaren Materials gerichtet und durch Verfahren des Gebläses mit der Druckgasdüse über auszuhärtende Bereiche der Materialoberfläche auf diese einwirkt, um die Oberfläche zu glätten und zu nivellieren, **dadurch gekennzeichnet, dass** zum Aufbau eines mehrkomponentigen Produkts das additive Aufbauverfahren durch Top-Down-Stereolithographie angewendet wird, um an eine schon vorhandene Komponente des aufzubauenden Produkts eine weitere Komponente des aufzubauenden Produkts anzubauen, wobei die vorhandene Komponente von einer sich unterhalb dieser befindlichen Bauplattform (20) getragen wird, dass die Bauplattform (20) in die Wanne (50) mit dem fließfähigen, photopolymerisierbaren Material zur Bildung einer neuen Schicht abgesenkt und weniger wieder angehoben wird, um so effektiv um eine Schichtdicke tiefer im photopolymerisierbaren Material zu liegen, wobei die Druckgasdüse des Gebläses (2) in einer solchen Höhe über der Wanne verfahrbar ist, dass sie nach der erstmaligen Absenkung der Bauplattform (20) höher als der höchste Punkt der vorhandenen Komponente liegt, dass die Druckgasdüse (2) über auszuhärtende Bereiche des photopolymerisierbaren Materials verfahren wird, um dessen Oberfläche zu glätten und zu nivellieren, dass die Oberfläche des photopolymerisierbaren Materials danach ortselektiv belichtet wird, und dass die letzten drei Schritte wiederholt werden, um die weitere Komponente sukzessive an die vorhandene Komponente anzubauen.

2. Verfahren nach Anspruch 1, **dadurch gekennzeichnet, dass** mit einem fest mit dem Gebläse (2) verbundenen Abstandssensor der Abstand zur Oberfläche des photopolymerisierbaren Materials gemessen wird.

3. Verfahren nach Anspruch 2, **dadurch gekennzeichnet, dass** der von dem Abstandssensor gemessene Abstand zur Oberfläche des photopolymerisierbaren Materials dazu verwendet wird, um Betriebsparameter des über die Oberfläche des photopolymerisierbaren Materials fahrenden Gebläses (2) dahingehend zu regeln, dass der erzeugte Gasstrom eine ortsselektive Verdrängung von photopolymerisierbaren Material in dem überfahrenen Bereich bewirkt, um die Oberfläche des photopolymerisierbaren Materials gezielt zu glätten und zu nivellieren.

4. Verfahren nach Anspruch 2 oder 3, **dadurch gekennzeichnet, dass** der von dem Abstandssensor gemessene Abstand zur Oberfläche des photopolymerisierbaren Materials dazu verwendet wird, um die Bildebene der Belichtungseinheit auf die Oberfläche des photopolymerisierbaren Materials und somit auf die Bauebene einzustellen, wobei dazu die Belichtungseinheit und/oder die Materialwanne bewegt werden.

5. Verfahren nach Anspruch 3 oder 4, **dadurch gekennzeichnet, dass** bei der Regelung des Betriebes des Gebläses (2) zur Glättung und Nivellierung der Oberfläche des photopolymerisierbaren Materials der Druck, die Strahlbreite, der Volumenstrom, die Verfahrgeschwindigkeit der Druckgasdüse des Gebläses (2) relativ zur Oberfläche und/oder die Neigung des von der Druckgasdüse des Gebläses (2) abgegebenen Druckgasstrahls zur Orthogonalen auf der Oberfläche des photopolymerisierbaren Materials geregelt wird, um einen definierten Abstand zur Oberfläche gleichbleibend über das auszuhärtende Gebiet zu realisieren und so eine gleichmässige, definierte Materialschicht oberhalb der zuvor ausgehärteten Bereiche zu erhalten.

6. Verfahren nach einem der vorhergehenden Ansprüche, **dadurch gekennzeichnet, dass** die Druckgasdüse (2) mit einem länglichen Düsenspalt als eine Luftrakel (Air Blade) ausgebildet ist, die mit einem einstellbaren Neigungswinkel im Bereich von +- 45° zur Orthogonalen auf der Oberfläche des photopolymerisierbaren Materials, vorzugsweise orthogonal zur Oberfläche, über die Oberfläche des photopolymerisierbaren Materials verfahren wird.

7. Verfahren nach einem der vorhergehenden Ansprüche, **dadurch gekennzeichnet, dass** die vorhandene Komponente wenigstens teilweise mit ausgehärtetem Photopolymer umbaut wird, so dass sie in dem umbauten Bereich von dem ausgehärteten Photopolymer eingefasst ist.

8. Verfahren nach einem der vorhergehenden Ansprüche, **dadurch gekennzeichnet, dass** in mehreren Schritten zum Anbau von mehreren weiteren Komponenten (36, 37, 38) mehrere verschiedene photopolymerisierbare Materialien nacheinander beim Aufbau des Produkts verbaut werden.

9. Verfahren nach einem der vorhergehenden Ansprüche, **dadurch gekennzeichnet, dass** die vorhandene Komponente des Produkts vorab durch ein Verfahren nach einem der vorhergehenden Ansprüche gebaut worden ist.

10. Verfahren nach einem der Ansprüche 1 bis 8, **dadurch gekennzeichnet, dass** zunächst ein erster Teil des Produkts mit mindestens einer Aussparung (62) zum Einlegen einer vorhandenen Komponente mit einem Verfahren nach einem der Ansprüche 1 bis 7 aufgebaut wird, die vorhandene Komponente (64) in die mindestens eine Aussparung (62) eingelegt wird und anschließend darüber ein weiterer Teil des Produkts (60) mit einem Verfahren nach einem der Ansprüche 1 bis 7 angebaut wird, so dass die eingelegte vorhandene Komponente (64) von dem aufgebauten Teil wenigstens teilweise eingefasst und umbaut ist.

11. Verfahren nach Anspruch 10, **dadurch gekennzeichnet, dass** der erste Teil des Produkts ein mit einem Verfahren nach einem der Ansprüche 1 bis 7 hergestellter Teil eines dentalen oder orthodontischen Produkts ist, wobei als vorhandene Komponente eine metallische oder keramische Komponente (64) oder eine Komponente (64) aus einem Kunststoff oder Komposit in die Ausnehmung (62) des ersten Teils eingelegt wird, und dass diese vorhandene Komponente mit dem anschließend als weiteren Teil des Produkts (60) angebauten Teil mit einem Verfahren nach einem der Ansprüche 1 bis 7 umbaut wird.

12. Verfahren nach einem der Ansprüche 1 bis 9, **dadurch gekennzeichnet, dass** die schon vorhandene Komponente ein Kunstzahnbogen oder ein Teil davon ist, wobei der Kunstzahnbogen oder das Teil davon mit der basalen Seite nach oben weisend auf der Bauplattform (20) gehalten ist, und dass als weitere Komponente eine Prothesenbasis (32) oder ein Teil davon um die basalen Bereiche des Kunstzahnbogens oder des Teils davon herum angebaut werden, wodurch der Kunstzahnbogen oder der Teil davon mit den basalen Bereichen formschlüssig in die aufgebaute Prothesenbasis (32) eingebettet wird.

13. Verfahren nach einem der vorhergehenden Ansprüche , **dadurch gekennzeichnet, dass** ein dentales oder orthodontisches Produkt, wie eine Totalprothese, eine Teilprothese oder eine orthodontische Zahnspange, aufgebaut wird, indem eine schon vorhandene Komponente durch weitere Teile des Produkts mit einem Verfahren nach einem der Ansprüche 1 bis 11 umbaut werden, so dass das dentale oder orthodontische Produkt als formschlüssiger Verbund der vorhandenen Komponente und der darum angebauten weiteren Teile ohne Fügen oder Verkleben hergestellt wird.

14. Verfahren nach einem der vorhergehenden Ansprüche, **dadurch gekennzeichnet, dass** als Druckgas für das Gebläse (2) Druckluft verwendet wird, die der Druckgasdüse als Druckluftdüse von einem Ventilator, einem Kompressor oder einem Drucklufttank zugeführt wird.

15. Verfahren nach einem der vorhergehenden Ansprüche, **dadurch gekennzeichnet, dass** nach einem Belichtungsschritt die Bauplattform über den Flüssigkeitsspiegel angehoben wird und die schon aufgebauten Teile zur Reinigung mit einem Druckluftstrahl aus dem Gebläse (2) abgeblasen werden, um anhaftendes, überschüssiges, unpolymerisiertes Materials zu entfernen, und optional anschließend die Bauplattform in ein Bad mit Reinigungsflüssigkeit eingetaucht und wieder daraus angehoben wird und die schon aufgebauten Teile darauf mit einem Druckluftstrahl aus dem Gebläse (2) zum Trocknen abgeblasen werden.

## Claims

1. Method for additive manufacturing of a three-dimensional product using top-down stereolithography, in which method flowable, photopolymerizable material in a vat (50) is solidified in a locally selective manner by exposure from above, wherein, from a pressurized gas nozzle of a blower (2) which is moveable above the liquid level in the vat, a pressurized gas jet extensive in a direction transverse to the moving direction of the blower (2) is directed to the surface of the photopolymerizable material and is acting on areas of the material surface to be solidified in order to smooth and level the surface by moving the pressurized gas jet from the blower across the surface, **characterized in that** for building a multi-component product the additive building method by top-down stereolithography is used in order attach to an already existing component of the product to be built a further component of the product to be built, wherein the already existing component is carried by a building platform (20) located below the already existing component, **in that** the building platform (20) is lowered in the vat (50) into the flowable, photopolymerizable material for defining a new layer and is raised again to be effectively located one layer thickness deeper in the photopolymerizable material, wherein the pressurized gas nozzle of the blower (2) is movable in such a height above the vat that after the first lowering of the building platform (20) the pressurized gas nozzle is located higher than the highest point of the already existing component, that the pressurized gas nozzle (2) is moved across areas of the photopolymerizable material to be solidified, in order to smooth and level its surface, that the surface of the photopolymerizable material is exposed in a locally selective manner, and that the last three steps are repeated until the further component has successfully be manufactured and attached to the already existing component.

2. Method according to claim 1, **characterized in that** the distance to the surface of the photopolymerizable material is measured with a distance sensor fixedly connected to the blower (2).

3. Method according to claim 2, **characterized in that** the distance to the surface of the photopolymerizable material measured by the distance sensor is utilized to control operating parameters of the blower (2) being moved across the surface of the photopolymerizable material to the effect that the generated pressurized gas stream causes a position dependent displacement of photopolymerizable material in the area covered in order to specifically smooth and level the surface of the photopolymerizable material.

4. Method according to claim 2 or 3, **characterized in that** the distance to the surface of the photopolymerizable material measured by the distance sensor is utilized to adjust the image plane of the exposure unit to the surface of the photopolymerizable material and thus to the building plane, wherein for this purpose the exposure unit and/or the material vat are moved.

5. Method according to claim 3 or 4, **characterized in that** for controlling the operation of the blower (2) for smoothing and leveling the surface of the photopolymerizable material the pressure, a width of the jet, a volumetric flow rate, a moving speed of the pressurized gas nozzle of the blower (2) relative to the surface and/or an angle of inclination of the pressurized gas jet ejected from the pressurized gas nozzle of the blower (2) with respect to an orthogonal axis on the surface of the photopolymerizable material is/are controlled in order to realize a defined distance to the surface uniformly across the area to be solidified and to obtain in this manner a defined, uniform material layer on top of the last cured region.

6. Method according to any of the preceding claims, **characterized in that** the pressurized gas nozzle (2) is formed with an elongated nozzle gap as an air blade which is moved across the surface of the photopolymerizable material with an adjustable angle of inclination in the range of +- 45° to an orthogonal axis on the surface of the photopolymerizable material, preferably orthogonally to the surface.

7. Method according to any of the preceding claims, **characterized in that** the already existing component is at least partially embedded by selectively attached solidified photopolymer so that the embedded portion is surrounded by solidified photopolymer.

8. Method according to any of the preceding claims, **characterized in that** in a plurality of steps for attaching a plurality of further components (36, 37, 38) several different photopolymerizable materials are used subsequently as building material for building the product.

9. Method according to any of the preceding claims, **characterized in that** the existing component of the product has been previously built using a method according to any of the preceding claims.

10. Method according to any of the claims 1 to 8, **characterized in that** in a first building phase a first component of the product which includes at least one recess (62) for inserting an existing component is built using a method according to any of the claims 1 to 7, **in that** the existing component (64) is inserted into the at least one recess (62), and subsequently on top of that a further component of the product (60) is built using a method according to any of the claims 1 to 7, such that the inserted existing component (64) is embedded by the built components and is at least partially enclosed.

11. Method according to claim 10, **characterized in that** the first part of the product is a component, built by a method according to any of the claims 1 to 7, of a dental or orthodontic product, wherein as existing component a metallic or ceramic component (64) or a component (64) made of plastic or composite is inserted in the recess (62) of the first component, and that this existing component is then embedded by a further component of the product (60) built to enclose the existing component by using a method according to any of the claims 1 to 7.

12. Method according to any of the claims 1 to 9, **characterized in that** the already existing component is an artificial dental arc or a part thereof, wherein the artificial dental arc or the part thereof is supported on the building platform (20) with the basal side facing upwards, and **in that** as further component a prosthetic basis (32) or a part thereof is attached around the basal regions of the artificial dental arc or the part thereof, whereby the artificial dental arc or the part thereof is embedded in the attached prosthetic basis (32) in a positively fitting manner.

13. Method according to any of the preceding claims, **characterized in that** a dental or orthodontic product, such as a total prosthesis, a partial prosthesis or an orthodontic brace, is generated by building around an already existing component further parts of the product using a method according of any of the claims 1 to 11, such that the dental or orthodontic product is formed as a positive-locking composite of the already existing component and the attached further parts, without joining or adhesively connecting them.

14. Method according to any of the preceding claims, **characterized in that** as pressurized gas for the blower (2) pressurized air is used, which pressurized air is supplied to the pressurized gas nozzle, formed as a pressurized air nozzle, by a fan, a compressor or by a pressurized air reservoir.

15. Method according to any of the preceding claims, **characterized in that** after an exposure step the building platform is raised above the liquid level and the already built part are blown off with the pressurized air stream from the blower (2) for cleaning, in order to remove adhering, unpolymerized excess material, and that optionally thereafter the building platform is immersed in a bath of cleaning liquid and is lifted up out of the cleaning liquid again and thereafter the already built parts are blown off using a pressurized air stream from the blower (2) for drying.

## Revendications

1. Procédé pour la construction additive d'un produit tridimensionnel par stéréolithographie de haut en bas, dans lequel un matériau photopolymérisable fluide est durci de manière sélective dans une cuve (50) par exposition à la lumière par le haut, dans lequel une buse de gaz comprimé d'un ventilateur (2), qui peut être déplacée au-dessus du niveau de liquide dans la cuve, est utilisée, un jet de gaz comprimé s'étendant transversalement à la direction de déplacement du ventilateur (2) est dirigé sur la surface du matériau photopolymérisable et agit sur celle-ci par déplacement du ventilateur avec la buse de gaz comprimé sur des zones à durcir de la surface de matériau, afin de lisser et de niveler la surface, **caractérisé en ce que en ce que**, pour la construction d'un produit à plusieurs composants, le procédé de construction additive par stéréolithographie de haut en bas est utilisé pour ajouter à un composant déjà existant du produit à construire un autre composant du produit à construire, dans lequel le composant existant est porté par une plateforme de construction (20) se trouvant en dessous de celui-ci, **en ce que** la plateforme de construction (20) est abaissée dans la cuve (50) avec le matériau photopolymérisable fluide pour former une nouvelle couche et est moins soulevée à nouveau pour se trouver ainsi effectivement plus bas d'une épaisseur de couche dans le matériau photopolymérisable, dans lequel la buse de gaz comprimé du ventilateur (2) peut être déplacée au-dessus de la cuve à une hauteur telle qu'après le premier abaissement de la plateforme de construction (20), elle se trouve plus haut que le point le plus élevé du composant présent, **en ce que** la buse de gaz comprimé (2) est déplacée au-dessus de zones à durcir du matériau photopolymérisable, afin de lisser et de niveler la surface de celles-ci, **en ce que** la surface du matériau photopolymérisable est ensuite exposée de manière localement sélective, et **en ce que** les trois dernières étapes sont répétées afin de monter successivement l'autre composant sur le composant existant.

2. Procédé selon la revendication 1, **caractérisé en ce que** la distance par rapport à la surface du matériau photopolymérisable est mesurée à l'aide d'un capteur de distance relié de manière fixe au ventilateur (2).

3. Procédé selon la revendication 2, **caractérisé en ce que** la distance par rapport à la surface du matériau photopolymérisable, mesurée par le capteur de distance, est utilisée pour commander des paramètres de fonctionnement du ventilateur (2) se déplaçant sur la surface du matériau photopolymérisable de sorte que le flux de gaz généré provoque un déplacement sélectif en fonction de la position du matériau photopolymérisable dans la zone traversée, afin de lisser et de niveler de manière ciblée la surface du matériau photopolymérisable.

4. Procédé selon la revendication 2 ou 3, **caractérisé en ce que** la distance par rapport à la surface du matériau photopolymérisable, mesurée par le capteur de distance, est utilisée pour régler le plan image de l'unité d'exposition par rapport à la surface du matériau photopolymérisable et donc par rapport au plan de construction, dans lequel l'unité d'exposition et/ou la cuve de matériau sont déplacés à cet effet.

5. Procédé selon la revendication 3 ou 4, **caractérisé en ce que**, lors de la régulation du fonctionnement du ventilateur (2) pour le lissage et le nivellement de la surface du matériau photopolymérisable, la pression, la largeur de jet, le débit volumétrique, la vitesse de déplacement de la buse de gaz comprimé du ventilateur (2) par rapport à la surface et/ou l'inclinaison de la buse de gaz comprimé du ventilateur (2) par rapport à l'orthogonale sur la surface du matériau photopolymérisable sont régulées afin de réaliser une distance définie par rapport à la surface de manière constante sur la zone à durcir et d'obtenir ainsi une couche de matériau régulière et définie au-dessus des zones préalablement durcies.

6. Procédé selon l'une quelconque des revendications précédentes, **caractérisé en ce que** la buse de gaz comprimé (2) avec une fente de buse allongée est réalisée sous la forme d'une lame d'air (Air Blade) qui est déplacée sur la surface du matériau photopolymérisable avec un angle d'inclinaison réglable dans la plage de +- 45° par rapport à l'orthogonale sur la surface du matériau photopolymérisable, de préférence orthogonale à la surface.

7. Procédé selon l'une quelconque des revendications précédentes, **caractérisé en ce que** le composant existant est au moins partiellement enrobé de photopolymère durci, de sorte qu'il est entouré par le photopolymère durci dans la zone enrobée.

8. Procédé selon l'une quelconque des revendications précédentes, **caractérisé en ce que**, en plusieurs étapes de montage de plusieurs autres composants (36, 37, 38), plusieurs matériaux photopolymérisables différents sont montés successivement lors de la construction du produit.

9. Procédé selon l'une quelconque des revendications précédentes, **caractérisé en ce que** le composant existant du produit a été préalablement construit grâce à un procédé selon l'une quelconque des revendications précédentes.

10. Procédé selon l'une quelconque des revendications 1 à 8, **caractérisé en ce que** l'on construit d'abord une première partie du produit avec au moins un évidement (62) pour l'insertion d'un composant existant avec un procédé selon l'une quelconque des revendications 1 à 7, on insère le composant existant (64) dans ledit au moins un évidement (62) et on monte ensuite par-dessus une autre partie du produit (60) avec un procédé selon l'une quelconque des revendications 1 à 7, de sorte que le composant existant inséré (64) est au moins partiellement encadré et enrobé par la partie construite.

11. Procédé selon la revendication 10, **caractérisé en ce que** la première partie du produit est une partie d'un produit dentaire ou orthodontique fabriquée par un procédé selon l'une quelconque des revendications 1 à 7, dans lequel un composant métallique ou céramique (64) ou un composant (64) en une matière plastique ou en un composite est inséré dans l'évidement (62) de la première partie en tant que composant existant, et **en ce que** ce composant existant est reconstruit avec la partie montée ensuite en tant qu'autre partie du produit (60) par un procédé selon l'une quelconque des revendications 1 à 7.

12. Procédé selon l'une quelconque des revendications 1 à 9, **caractérisé en ce que** le composant déjà présent est un arc dentaire artificiel ou une partie de celui-ci, dans lequel l'arcade dentaire artificielle ou la partie de celle-ci est maintenue sur la plateforme de construction (20) avec le côté basal orienté vers le haut, et **en ce que**, comme autre composant, une base de prothèse (32) ou une partie de celle-ci est montée autour des zones basales de l'arcade dentaire artificielle ou de la partie de celle-ci, par quoi l'arcade dentaire artificielle ou la partie de celle-ci est encastrée par complémentarité de forme avec les zones basales dans la base de prothèse (32) construite.

13. Procédé selon l'une quelconque des revendications précédentes, **caractérisé en ce qu'**un produit dentaire ou orthodontique, tel qu'une prothèse totale, une prothèse partielle ou un appareil dentaire orthodontique, est construit en transformant un composant déjà existant par d'autres parties du produit avec un procédé selon l'une quelconque des revendications 1 à 11, de sorte que le produit dentaire ou orthodontique est fabriqué sous la forme d'un assemblage par complémentarité de forme du composant existant et des autres parties construites autour de celui-ci sans assemblage ni collage.

14. Procédé selon l'une quelconque des revendications précédentes, **caractérisé en ce qu'**on utilise comme gaz comprimé pour le ventilateur (2) de l'air comprimé qui est amené à la buse de gaz comprimé en tant que buse d'air comprimé par un ventilateur, un compresseur ou un réservoir d'air comprimé.

15. Procédé selon l'une quelconque des revendications précédentes, **caractérisé en ce que**, après une étape d'exposition, la plateforme de construction est soulevée au-dessus du niveau de liquide et les parties déjà construites sont soufflées à l'aide d'un jet d'air comprimé provenant du ventilateur (2) pour un nettoyage afin d'éliminer le matériau non polymérisé en excès qui adhère, et, facultativement, la plateforme de construction est ensuite immergée dans un bain de liquide de nettoyage et soulevée à nouveau hors de celui-ci et les parties déjà construites sur celle-ci sont soufflées à l'aide d'un jet d'air comprimé provenant du ventilateur (2) pour un séchage.
